(19)

Europäisches
Patentamt
European
Patent Office
Office européen
des brevets

(11) **EP 3 806 458 A1**

(12) **EUROPEAN PATENT APPLICATION**
published in accordance with Art. 153(4) EPC

(43) Date of publication:
**14.04.2021 Bulletin 2021/15**

(21) Application number: **19812642.7**

(22) Date of filing: **24.05.2019**

(51) Int Cl.:
*H04N 13/178* [(2018.01)]     *H04N 13/161* [(2018.01)]
*H04N 13/194* [(2018.01)]     *H04N 13/111* [(2018.01)]

(86) International application number:
**PCT/KR2019/006269**

(87) International publication number:
**WO 2019/231178 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.06.2018 US 201862679681 P**

(71) Applicant: **LG Electronics Inc.**
**SEOUL, 07336 (KR)**

(72) Inventors:
• **OH, Hyunmook**
**Seoul 06772 (KR)**
• **OH, Sejin**
**Seoul 06772 (KR)**

(74) Representative: **Plasseraud IP**
**66, rue de la Chaussée d'Antin**
**75440 Paris Cedex 09 (FR)**

(54) **METHOD AND DEVICE FOR TRANSMITTING AND RECEIVING METADATA ABOUT PLURALITY OF VIEWPOINTS**

(57)     In a method for processing 360-degree video data, performed by a 360-degree video transmission device, according to one embodiment of the present invention, the method comprises the steps of: acquiring 360-degree video data captured by at least one image acquisition device; processing the 360-degree video data so as to derive a two-dimensional picture including an omnidirectional image; generating metadata about the 360-degree video data; encoding information about the two-dimensional picture; and performing encapsulation on the basis of the information about the two-dimensional picture and the metadata, wherein the metadata includes non-contiguous flag information indicating whether one or more viewpoints included in a viewpoint group in the 360-degree video data are non-contiguous with each other.

FIG. 23

EP 3 806 458 A1

**Description**

[Technical Field]

The present disclosure relates to metadata for 360-degree video data, and more particularly, to a method and apparatus for transmitting and receiving metadata about multiple viewpoints.

[Background Art]

A virtual reality (VR) system gives the user a sense of being in an electronically projected environment. An augmented reality (AR) system arranges a 3D virtual image on a real image or a background in an overlapping manner to provide the user with a sense of being in a mixed environment of virtuality and reality. The system for providing VR or AR may be further improved to provide higher quality images and stereophonic sound. A VR or AR system may allow a user to interactively consume VR or AR content.

With the increasing demand for VR or AR content, there is an increasing need for a method of more specifically signaling information on multiple-viewpoints in VR or AR content.

[Disclosure]

[Technical Problem]

An object of the present disclosure is to provide a method and apparatus for processing 360-degree video data.

Another object of the present disclosure is to provide a method and apparatus for transmitting or receiving metadata for 360-degree video data.

Another object of the present disclosure is to provide a method and apparatus for transmitting or receiving metadata about multiple viewpoints.

Another object of the present disclosure is to provide a method and apparatus for transmitting or receiving non-contiguous flag information indicating whether at least one viewpoint included in a viewpoint group is non-contiguous to each other.

Another object of the present disclosure is to provide a method and apparatus for transmitting or receiving anchor viewpoint flag information indicating whether a current viewpoint is an anchor viewpoint.

[Technical Solution]

In one aspect of the present disclosure, provided herein is a method of processing 360-degree video data by a 360-degree video transmission apparatus. The method may include acquiring 360-degree video data captured by at least one image acquisition device, processing the 360-degree video data and deriving a two-dimensional picture including an omnidirectional image, generating metadata for the 360-degree video data, encoding information about the two-dimensional picture, and performing encapsulation based on the information about the two-dimensional picture and the metadata, wherein the metadata contains non-contiguous flag information indicating whether at least one viewpoint included in a viewpoint group in the 360-degree video data is non-contiguous to each other.

In another aspect of the present disclosure, provided herein is a 360-degree video transmission apparatus for processing 360-degree video data. The 360-degree video transmission apparatus may include a data input unit configured to acquire 360-degree video data captured by at least one image acquisition device, a projection processor configured to process the 360-degree video data and deriving a two-dimensional picture including an omnidirectional image, a metadata processor configured to generate metadata for the 360-degree video data, a data encoder configured to encode information about the two-dimensional picture, and an encapsulation processor configured to perform encapsulation based on the information about the two-dimensional picture and the metadata, wherein the metadata contains non-contiguous flag information indicating whether at least one viewpoint included in a viewpoint group in the 360-degree video data is non-contiguous to each other.

In another aspect of the present disclosure, provided herein is a method of processing 360-degree video data by a 360-degree video reception apparatus. The method may include receiving information about 360-degree video data, acquiring information about an encoded picture and metadata from the information about the 360-degree video data, decoding the picture based on the information about the encoded picture, and rendering the decoded picture based on the metadata, wherein the metadata contains non-contiguous flag information indicating whether at least one viewpoint included in a viewpoint group in the 360-degree video data is non-contiguous to each other.

In another aspect of the present disclosure, provided herein is a 360-degree video reception apparatus for processing 360-degree video data. The 360-degree video reception apparatus may include a reception processor configured to receive information about 360-degree video data and acquire information about an encoded picture and metadata from the information about the 360-degree video data, a data decoder configured to decode the picture based on the information about the encoded picture, and a renderer configured to render the decoded picture based on the metadata, wherein the metadata contains non-contiguous flag information indicating whether at least one viewpoint included in a viewpoint group in the 360-degree video data is non-contiguous to each other.

[Advantageous Effects]

According to the present disclosure, VR content may be efficiently transmitted in an environment supporting next-generation hybrid broadcasting, which employs a terrestrial broadcasting network and the Internet.

According to the present disclosure, an interactive experience may be provided to a user who consumes 360 content.

According to the present disclosure, necessary 360 content information may be efficiently delivered to the user while increasing the transmission capacity.

According to the present disclosure, signaling information about 360-degree video data may be efficiently stored and transmitted through an International Organization for Standardization (ISO)-based media file format such as an ISO base media file format (ISOBMFF).

According to the present disclosure, signaling information about 360-degree video data may be transmitted through HyperText Transfer Protocol (HTTP)-based adaptive streaming such as Dynamic Adaptive Streaming over HTTP (DASH).

According to the present disclosure, signaling information about 360-degree video data may be stored and transmitted through a supplemental enhancement information (SEI) message or video usability information (VUI), thereby improving the overall transmission efficiency.

According to the present disclosure, non-contiguous flag information indicating whether at least one viewpoint included in a viewpoint group is non-contiguous to each other may be effectively signaled.

According to the present disclosure, anchor viewpoint flag information indicating whether a current viewpoint is an anchor viewpoint may be effectively signaled.

[Description of Drawings]

FIG. 1 is a diagram showing an overall architecture for providing 360 content according to an embodiment.

FIGS. 2 and 3 illustrate a structure of a media file according to according to some embodiments.

FIG. 4 illustrates an example of the overall operation of a DASH-based adaptive streaming model.

FIG. 5 is a diagram schematically illustrating a configuration of a 360 video transmission apparatus according to an embodiment.

FIG. 6 is a diagram schematically illustrating a configuration of a 360 video reception apparatus according to an embodiment.

FIG. 7 is a diagram illustrating the concept of aircraft principal axes for describing a 3D space according to an embodiment.

FIG. 8 exemplarily illustrates a 2D image to which a 360 video processing process and a projection format-based region-wise packing process are applied.

FIGS. 9A and 9B exemplarily show projection formats according to some embodiments.

FIGS. 10A and 10B are diagrams illustrating tiles according to some embodiments.

FIG. 11 shows an example of 360-degree video-related metadata according to an embodiment.

FIG. 12 schematically illustrates the concept of a viewpoint, a viewing position, and a viewing orientation.

FIG. 13 is a diagram schematically showing an exemplary architecture for providing 3DoF+ video according to an embodiment.

FIGS. 14A and 14B are diagrams illustrating an example of a 3DoF + end-to-end system architecture.

FIG. 15 is a diagram schematically illustrating an example of a FLUS architecture.

FIG. 16 is a diagram schematically illustrating an example of configuration of a 3DoF+ transmission terminal.

FIG. 17 is a diagram schematically illustrating an example of a configuration of a 3DoF+ reception terminal.

FIG. 18 illustrates an example of capturing information about VR content at multiple positions.

FIG. 19 illustrates an example of three viewpoints presented based on a global coordinate system.

FIG. 20 shows an example of viewpoint group IDs of multiple viewpoints and non-contiguous flag information.

FIGS. 21A and 21B illustrate an example of display according to whether multiple viewpoints are contiguous to each other.

FIGS. 22A and 22B illustrate another example of display according to whether multiple viewpoints are contiguous to each other.

FIG. 23 shows an example of viewpoint group IDs, non-contiguous flag information, and anchor viewpoint flag information of multiple viewpoints.

FIGS. 24A and 24B illustrate yet another example of display according to whether multiple viewpoints are contiguous to each other.

FIGS. 25A and 25B show an example of multiple viewpoints.

FIG. 26 is a flowchart illustrating a method of operating a 360-degree video transmission apparatus according to an embodiment.

FIG. 27 is a block diagram illustrating a configuration of a 360-degree video transmission apparatus according to an embodiment.

FIG. 28 is a flowchart illustrating a method of operating a 360-degree video reception apparatus according to an embodiment.

FIG. 29 is a block diagram illustrating a configuration of a 360-degree video reception apparatus according to an embodiment.

[Best Mode]

According to an embodiment of the present disclosure, provided herein is a method of processing 360-degree video data by a 360-degree video transmission apparatus. The method includes acquiring 360-degree video data captured by at least one image acquisition device, processing the 360-degree video data and deriving a two-dimensional picture including an omnidirectional image, generating metadata for the 360-degree video data, encoding information about the two-dimensional picture, and performing encapsulation based on the information about the two-dimensional picture and the metadata, wherein the metadata includes non-contiguous flag information indicating whether at least one viewpoint included in a viewpoint group in the 360-degree video data is non-contiguous to each other.

[Mode]

The technical features described below may be applied to a standard specification by a Moving Picture Experts Group (MPEG) standardization organization, and may be used in a technical field dealing with video, images or audio. For example, methods or embodiments disclosed in the following description may relate to disclosures of the MPEG-I standard (ISO/IEC 23090) or next-generation standards following the MPEG-I standard (ISO/IEC 23090).

The present disclosure may be subjected to various changes and may have various embodiments, and specific embodiments will be described in detail with reference to the accompanying drawings. However, this is not intended to limit the disclosure to the specific embodiments. Terms used in this specification are merely adopted to explain specific embodiments, and are not intended to limit the technical spirit of the present disclosure. A singular expression includes a plural expression unless the context clearly indicates otherwise. In In this specification, the term "include" or "have" is intended to indicate that characteristics, figures, steps, operations, constituents, and components disclosed in the specification or combinations thereof exist, and should be understood as not precluding the existence or addition of one or more other characteristics, figures, steps, operations, constituents, components, or combinations thereof.

Though individual elements described in the present disclosure are independently shown in the drawings for convenience of description of different functions, this does not mean that the elements are implemented in hardware or software elements separate from each other. For example, two or more of the elements may be combined to form one element, or one element may be divided into a plurality of elements. Embodiments in which respective elements are integrated and/or separated are also within the scope of the present disclosure without departing from the essence of the present disclosure.

Hereinafter, exemplary embodiments of the present disclosure will be described in detail with reference to the accompanying drawings. The same reference numerals will be used for the same components in the drawings, and redundant descriptions of the same components are omitted.

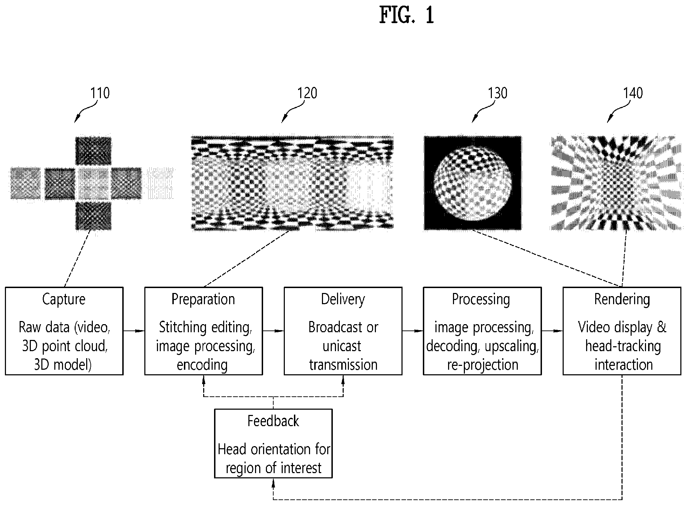

FIG. 1 is a diagram showing an overall architecture for providing 360 content according to an embodiment.

In this specification, "image" may mean a concept including a still image and a video that is a set of a series of still images over time. Also, "video" does not necessarily mean a set of a series of still images over time. In some cases, a still image may be interpreted as a concept included in a video.

In order to provide virtual reality (VR) to users, a method of providing 360-degree content may be considered. Here, the 360-degree content may be referred to as three Degrees of Freedom (3DoF) content, and VR may refer to a technique or an environment for replicating a real or virtual environment. VR may artificially provide sensuous experiences to users and thus users may experience electronically projected environments therethrough.

360 content may refer to all content for realizing and providing VR, and may include 360-degree video and/or 360 audio. The 360 degree video and/or 360 audio may also be referred to as 3D video and/or 3D audio 360-degree video may refer to video or image content which is needed to provide VR and is captured or reproduced in all directions (360 degrees) at the same time. Hereinafter, 360-degree video may refer to 360-degree video. 360-degree video may refer to a video or image presented in various types of 3D space according to a 3D model. For example, 360-degree video may be presented on a spherical surface. 360 audio may be audio content for providing VR and may refer to spatial audio content which may make an audio generation source recognized as being located in a specific 3D space. 360 audio may also be referred to as 3D audio. 360 content may be generated, processed and transmitted to users, and the users may consume VR experiences using the 360 content. The 360 video may be called omnidirectional video, and the 360 image may be called omnidirectional image.

To provide 360-degree video, a 360-degree video may be captured first using one or more cameras. The captured 360-degree video may be transmitted through a series of processes, and the data received on the receiving side may be processed into the original 360-degree video and rendered. Then, the 360-degree video may be provided to a user.

Specifically, the entire processes for providing 360-degree video may include a capture process, a preparation process, a transmission process, a processing process, a rendering process and/or a feedback process.

The capture process may refer to a process of capturing images or videos for multiple viewpoints through one or more cameras. Image/video data as shown in part 110 of FIG. 1 may be generated through the capture process. Each plane in part 110 of FIG. 1 may refer to an image/video for each viewpoint. The captured images/videos may be called raw data. In the capture process, metadata related to capture may be generated.

A special camera for VR may be used for capture. According to an embodiment, when a 360-degree video for a virtual space generated using a computer is to be provided, the capture operation using an actual camera may not be performed. In this case, the capture process may be replaced by a process of simply generating related data.

The preparation process may be a process of processing the captured images/videos and the metadata generated in the capture process. The captured images/videos may be subjected to stitching, projection, region-wise packing and/or encoding in the preparation process.

First, the images/videos may be subjected to the stitching process. The stitching process may be a process of connecting the captured images/videos to create a single panoramic image/video or a spherical image/video.

Then, the stitched images/videos may be subjected to the projection process. In the projection process, the stitched images/videos may be projected onto a 2D image. The 2D image may be referred to as a 2D image frame depending on the context. Projecting onto a 2D image may be referred to as mapping to the 2D image. The projected image/video data may take the form of a 2D image as shown in part 120 of FIG. 1.

The video data projected onto the 2D image may be subjected to the region-wise packing process in order to increase video coding efficiency. Region-wise packing may refer to a process of dividing the video data projected onto the 2D image into regions and processing the regions. Here, the regions may refer to regions obtained by dividing the 2D image onto which 360-degree video data is projected. According to an embodiment, such regions may be distinguished by dividing the 2D image equally or randomly. According to an embodiment, the regions may be divided according to a projection scheme. The region-wise packing process may be an optional process and may thus be omitted from the preparation process.

According to an embodiment, this processing process may include a process of rotating the regions or rearranging the regions on the 2D image in order to increase video coding efficiency. For example, the regions may be rotated such that specific sides of the regions are positioned close to each other. Thereby, efficiency may be increased in coding.

According to an embodiment, the processing process may include a process of increasing or decreasing the resolution of a specific region in order to differentiate the resolutions for regions of the 360-degree video. For example, the resolution of regions corresponding to a relatively important area of the 360-degree video may be increased over the resolution of the other regions. The video data projected onto the 2D image or the region-wise packed video data may be subjected to the encoding process that employs a video codec.

According to an embodiment, the preparation process may further include an editing process. In the editing process, the image/video data may be edited before or after the projection. In the preparation process, metadata for stitching/projection/encoding/editing may be generated. In addition, metadata about the initial viewpoint or the region of interest (ROI) of the video data projected onto the 2D image may be generated.

The transmission process may be a process of processing and transmitting the image/video data and the metadata obtained through the preparation process. Processing according to any transport protocol may be performed for transmission. The data that has been processed for transmission may be delivered over a broadcast network and/or broadband. The data may be delivered to a reception side on an on-demand basis. The receiving side may receive the data through various paths.

The processing process may refer to a process of decoding the received data and re-projecting the projected image/video data onto a 3D model. In this process, the image/video data projected onto 2D images may be re-projected onto a 3D space. This process may be referred to as mapping projection depending on the context. Here, the shape of the 3D space to which the data is mapped may depend on the 3D model. For example, 3D models may include a sphere, a cube, a cylinder and a pyramid.

According to an embodiment, the processing process may further include an editing process and an up-scaling process. In the editing process, the image/video data may be edited before or after the re-projection. When the image/video data has a reduced size, the size of the image/video data may be increased by up-scaling the samples in the up-scaling process. The size may be reduced through down-scaling, when necessary.

The rendering process may refer to a process of rendering and displaying the image/video data re-projected onto the 3D space. The re-projection and rendering may be collectively expressed as rendering on a 3D model. The image/video re-projected (or rendered) on the 3D model may take the form as shown in part 130 of FIG. 1. The part 130 of FIG. 1 corresponds to a case where the image/video data is re-projected onto a 3D model of sphere. A user may view a part of the regions of the rendered image/video through a VR display or the like. Here, the region viewed by the user may take the form as shown in part 140 of FIG. 1.

The feedback process may refer to a process of delivering various types of feedback information which may be acquired in the display process to a transmitting side. Through the feedback process, interactivity may be provided in 360-degree video consumption. According to an embodiment, head orientation information, viewport information indicating a region currently viewed by a user, and the like may be delivered to the transmitting side in the feedback process. According to an embodiment, the user may interact with content realized in a VR environment. In this case, information related to the interaction may be delivered to the transmitting side or a service provider in the feedback process. In an embodiment, the feedback process may be skipped.

The head orientation information may refer to information about the position, angle and motion of a user's head. Based on this information, information about a region currently viewed by the user in the 360-degree video, that is, viewport information may be calculated.

The viewport information may be information about a region currently viewed by a user in the 360-degree video. Gaze analysis may be performed using this information to check how the user consumes 360-degree video and how long the user gazes at a region of the 360-degree video. The gaze analysis may be performed at the receiving side and a result of the analysis may be delivered to the transmitting side on a feedback channel. A device such as a VR display may extract a viewport region based on the position/orientation of the user's head, vertical or horizontal Field of View (FOV) information supported by the device, and the like.

According to an embodiment, the aforementioned feedback information may be consumed on the receiving side as well as being delivered to the transmitting side. That is, decoding, re-projection and rendering processes of the receiving side may be performed using the aforementioned feedback information. For example, only 360-degree video corresponding to the region currently viewed by the user may be preferentially decoded and rendered using the head orientation information and/or the viewport information.

Here, the viewport or the viewport region may refer to a region of 360-degree video currently viewed by the user. A viewpoint may be a point which is viewed by the user in a 360-degree video and may represent a center point of the viewport region. That is, a viewport is a region centered on a viewpoint, and the size and shape of the region may be determined by FOV, which will be described later.

In the above-described architecture for providing 360-degree video, image/video data which is subjected to a series of capture/projection/encoding/transmission/decoding/re-projection/rendering processes may be called 360-degree video data. The term "360-degree video data" may be used as a concept including metadata or signaling information related to such image/video data.

To store and transmit media data such as the audio or video data described above, a standardized media file format may be defined. According to an embodiment, a media file may have a file format based on ISO base media file format (ISOBMFF).

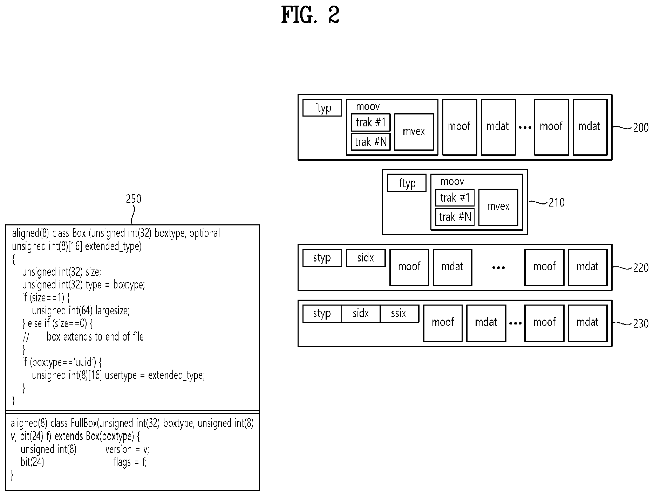

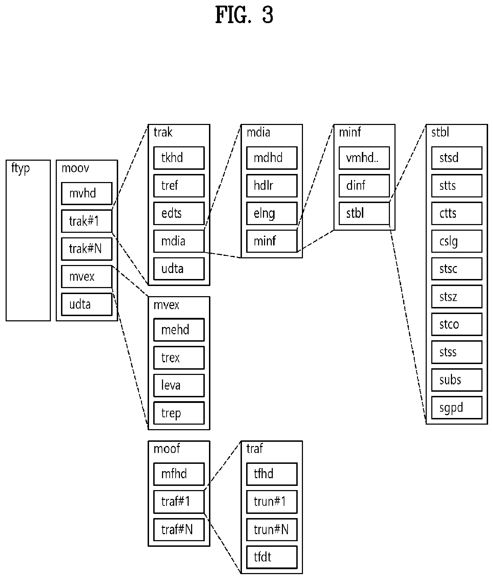

FIGS. 2 and 3 illustrate the structure of a media file according to some embodiments.

A media file according to an embodiment may include at least one box. Here, the box may be a data block or an object containing media data or metadata related to the media data. The boxes may be arranged in a hierarchical structure. Thus, the data may be classified according to the boxes and the media file may take a form suitable for storage and/or transmission of large media data. In addition, the media file may have a structure which facilitates access to media information as in the case where the user moves to a specific point in the media content.

The media file according to according to the embodiment may include an ftyp box, a moov box and/or an mdat box.

The ftyp box (file type box) may provide information related to a file type or compatibility of a media file. The ftyp box may include configuration version information about the media data of the media file. A decoder may identify the media file with reference to the ftyp box.

The moov box (movie box) may include metadata about the media data of the media file. The moov box may serve as a container for all metadata. The moov box may be a box at the highest level among the metadata related boxes. According to an embodiment, only one moov box may be present in the media file.

The mdat box (media data box) may a box that actually contains the media data of the media file. The media data may contain audio samples and/or video samples and the mdat box may serve as a container to contain such media samples.

According to an embodiment, the moov box may include an mvhd box, a trak box and/or an mvex box as sub-boxes.

The mvhd box (movie header box) may contain media presentation related information about the media data included in the media file. That is, the mvhd box may contain information such as a media generation time, change time, time standard and period of the media presentation.

The trak box (track box) may provide information related to a track of the media data. The trak box may contain information such as stream related information about an audio track or a video track, presentation related information, and access related information. Multiple trak boxes may be provided depending on the number of tracks.

According to an embodiment, the trak box may include a tkhd box (track header box) as a sub-box. The tkhd box may contain information about a track indicated by the trak box. The tkhd box may contain information such as a generation time, change time and track identifier of the track.

The mvex box (movie extend box) may indicate that the media file may include a moof box, which will be described later. The moov boxes may need to be scanned to recognize all media samples of a specific track.

According to an embodiment, the media file may be divided into multiple fragments (200). Accordingly, the media file may be segmented and stored or transmitted. The media data (mdat box) of the media file may be divided into multiple fragments and each of the fragments may include a moof box and a divided mdat box. According to an embodiment, the information of the ftyp box and/or the moov box may be needed to use the fragments.

The moof box (movie fragment box) may provide metadata about the media data of a corresponding fragment. The moof box may be a box at the highest layer among the boxes related to the metadata of the corresponding fragment.

The mdat box (media data box) may contain actual media data as described above. The mdat box may contain media samples of the media data corresponding to each fragment.

According to an embodiment, the above-described moof box may include an mfhd box and/or a traf box as sub-boxes.

The mfhd box (movie fragment header box) may contain information related to correlation of multiple divided fragments. The mfhd box may include a sequence number to indicate the sequential position of the media data of the corresponding fragment among the divided data. In addition, it may be checked whether there is missing data among the divided data, based on the mfhd box.

The traf box (track fragment box) may contain information about a corresponding track fragment. The traf box may provide metadata about a divided track fragment included in the fragment. The traf box may provide metadata for decoding/reproducing media samples in the track fragment. Multiple traf boxes may be provided depending on the number of track fragments.

According to an embodiment, the traf box described above may include a tfhd box and/or a trun box as sub-boxes.

The tfhd box (track fragment header box) may contain header information about the corresponding track fragment. The tfhd box may provide information such as a default sample size, period, offset and identifier for the media samples of the track fragment indicated by the traf box.

The trun box (track fragment run box) may contain information related to the corresponding track fragment. The trun box may contain information such as a period, size and reproduction timing of each media sample.

The media file or the fragments of the media file may be processed into segments and transmitted. The segments may include an initialization segment and/or a media segment.

The file of the illustrated embodiment 210 may be a file containing information related to initialization of the media decoder except the media data. This file may correspond to the above-described initialization segment. The initialization segment may include the ftyp box and/or the moov box described above.

The file of the illustrated embodiment 220 may be a file including the above-described fragments. For example, this file may correspond to the above-described media segment. The media segment may include the moof box and/or the mdat box described above. The media segment may further include an styp box and/or an sidx box.

The styp box (segment type box) may provide information for identifying media data of a divided fragment. The styp box may perform the same function as the above-described ftyp box for a divided fragment. According to an embodiment, the styp box may have the same format as the ftyp box.

The sidx box (segment index box) may provide information indicating an index for a divided fragment. Accordingly, the sequential position of the divided fragment may be indicated.

An ssix box may be further provided according to an embodiment 230. When a segment is further divided into sub-segments, the ssix box (sub-segment index box) may provide information indicating indexes of the sub-segments.

The boxes in a media file may further contain extended information about the basis of a box as shown in an embodiment 250 or a FullBox. In this embodiment, the size field, largesize, may indicate the length of a corresponding box in bytes. The version field may indicate the version of a corresponding box format. The Type field may indicate the type or identifier of the box. The flags field may indicate a flag related to the box.

According to an embodiment, the fields (attributes) for 360-degree video may be carried in a DASH-based adaptive streaming model.

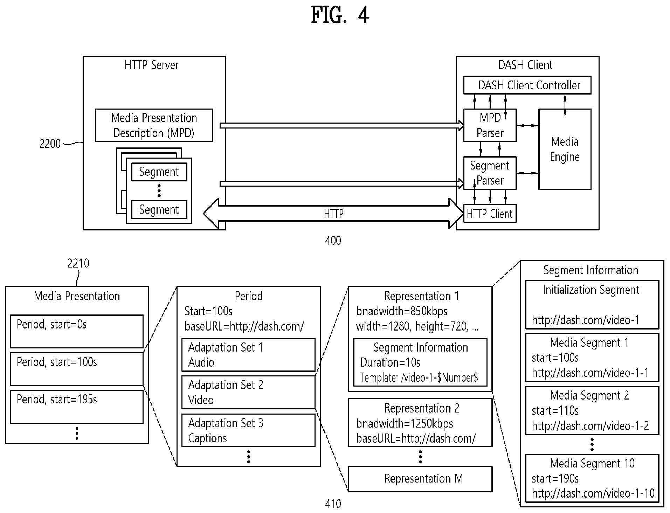

FIG. 4 illustrates an example of the overall operation of a DASH-based adaptive streaming model.

A DASH-based adaptive streaming model according to an embodiment 400 shown in the figure describes operations between an HTTP server and a DASH client. Here, DASH (dynamic adaptive streaming over HTTP) is a protocol for supporting HTTP-based adaptive streaming and may dynamically support streaming depending on the network condition. Accordingly, AV content may be seamlessly played.

First, the DASH client may acquire an MPD. The MPD may be delivered from a service provider such as the HTTP server. The DASH client may make a request to the server for segments described in the MPD, based on the information for accessing the segments. The request may be made based on the network condition.

The DASH client may acquire the segments, process the segments through a media engine and display the processed segments on a screen. The DASH client may request and acquire necessary segments by reflecting the playback time and/or the network condition in real time (Adaptive Streaming). Accordingly, content may be seamlessly played.

The MPD (media presentation description) is a file containing detailed information allowing the DASH client to dynamically acquire segments, and may be represented in an XML format.

A DASH client controller may generate a command for requesting the MPD and/or segments considering the network condition. In addition, the DASH client controller may control an internal block such as the media engine to use the acquired information.

An MPD parser may parse the acquired MPD in real time. Accordingly, the DASH client controller may generate a command for acquiring necessary segments.

A segment parser may parse the acquired segment in real time. Internal blocks such as the media engine may perform a specific operation according to the information contained in the segment.

The HTTP client may make a request to the HTTP server for a necessary MPD and/or segments. In addition, the HTTP client may deliver the MPD and/or segments acquired from the server to the MPD parser or the segment parser.

The media engine may display content on the screen based on the media data included in the segments. In this operation, the information of the MPD may be used.

The DASH data model may have a hierarchical structure 410. Media presentation may be described by the MPD. The MPD may describe a time sequence of multiple periods for the media presentation. A period may represent one section of media content.

In one period, data may be included in adaptation sets. An adaptation set may be a set of multiple media content components which may be exchanged. An adaption may include a set of representations. A representation may correspond to a media content component. In one representation, content may be temporally divided into multiple segments, which may be intended for appropriate accessibility and delivery. To access each segment, URL of each segment may be provided.

The MPD may provide information related to media presentation. A period element, an adaptation set element, and a representation element may describe a corresponding period, a corresponding adaptation set, and a corresponding representation, respectively. A representation may be divided into sub-representations. A sub-representation element may describe a corresponding sub-representation.

Here, common attributes/elements may be defined. The common attributes/elements may be applied to (included in) sub-representations. The common attributes/elements may include EssentialProperty and/or SupplementalProperty.

The EssentialProperty may be information including elements regarded as essential elements in processing the corresponding media presentation related data. The SupplementalProperty may be information including elements which may be used in processing the corresponding media presentation related data. In an embodiment, descriptors which will be described later may be defined in the EssentialProperty and/or the SupplementalProperty when delivered through an MPD.

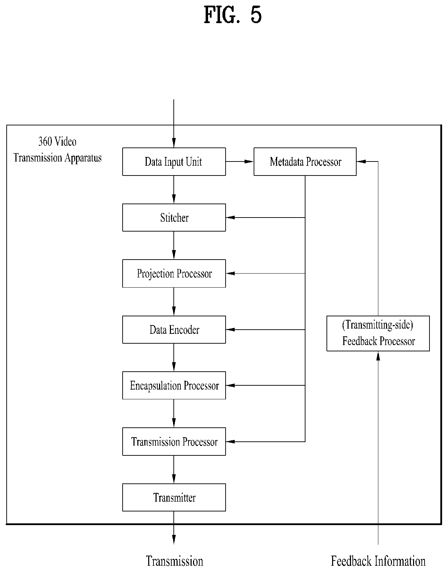

FIG. 5 is a diagram schematically illustrating a configuration of a 360 video transmission apparatus according to an embodiment.

The 360 video transmission apparatus according to the embodiment may perform operations related to the preparation process or transmission process described above. The 360 video transmission apparatus may include a data input unit, a stitcher, a projection processor, a region-wise packing processor (not shown), a metadata processor, a (transmitting-side) feedback processor, a data encoder, an encapsulation processor, a transmission processor, and/or a transmitter as internal/external elements.

The data input unit may receive images/videos for each captured viewpoint. These viewpoint-specific images/videos may be images/videos captured by one or more cameras. The data input unit may also receive metadata generated during the capture process. The data input unit may deliver the input images/videos for each viewpoint to the stitcher, and deliver the metadata of the capture process to the signaling processor.

The stitcher may perform stitching on the captured images/videos for each viewpoint. The stitcher may deliver the stitched 360 video data to the projection processor. When necessary, the stitcher may receive necessary metadata from the metadata processor and use the same for stitching. The stitcher may deliver metadata generated in the stitching process to the metadata processor. The metadata of the stitching process may contain information such as an indication of whether stitching has been performed and a stitching type.

The projection processor may project the stitched 360 video data onto a 2D image. The projection processor may perform projection according to various schemes, which will be described later. The projection processor may perform mapping in consideration of a corresponding depth of 360 video data for each viewpoint. When necessary, the projection processor may receive metadata necessary for projection from the metadata processor and use the same in the projection operation. The projection processor may deliver the metadata generated in the projection process to the metadata processor. The metadata of the projection processor may include a type of a projection scheme.

The region-wise packing processor (not shown) may perform the above-described region-wise packing process. That is, the region-wise packing processor may perform processing such as dividing the projected 360 video data into regions, rotating or rearranging each region, or changing the resolution of each region. As described above, the region-wise packing process is optional. When region-wise packing is skipped, the region-wise packing processor may be omitted. When necessary, the region-wise packing processor may receive metadata necessary for region-wise packing from the metadata processor and use the same in the region-wise packing operation. The region-wise packing processor may deliver the metadata generated in the region-wise packing process to the metadata processor. The metadata of the region-wise packing processor may include a rotation degree and size of each region.

According to an embodiment, the stitcher, the projection processor and/or the region-wise packing processor described above may be implemented by one hardware component.

The metadata processor may process metadata that may be generated in the capture process, stitching process, projection process, region-wise packing process, encoding process, encapsulation process, and/or transmission process. Using the metadata, the metadata processor may generate 360 video-related metadata. According to an embodiment, the metadata processor may generate 360 video-related metadata in the form of a signaling table. Depending on the signaling context, the 360 video-related metadata may be referred to as metadata or 360 video-related signaling information. The metadata processor may also deliver the acquired or generated metadata to internal elements of the 360 video transmission apparatus, as necessary. The metadata processor may transmit the 360 video-related metadata to the data encoder, the encapsulation processor and/or the transmission processor such that the metadata may be transmitted to the receiving side.

The data encoder may encode 360 video data projected onto a 2D image and/or 360 video data packed region-wise. The 360 video data may be encoded in various formats.

The encapsulation processor may encapsulate the encoded 360 video data and/or the 360 video-related metadata in the form of a file. Here, the 360 video-related metadata may be received from the metadata processor described above. The encapsulation processor may encapsulate the data in a file format such as ISOBMFF, or CFF, or process the data into DASH segments or the like. According to an embodiment, the encapsulation processor may include the 360 video-related metadata in a file format. The 360-related metadata may be included, for example, in various levels of boxes in the ISOBMFF, or included as data in separate tracks in the file. According to an embodiment, the encapsulation processor may encapsulate the 360 video-related metadata into a file. The transmission processor may process the encapsulated 360 video data according to the file format so as to be transmitted. The transmission processor may process the 360 video data according to any transport protocol. The processing for transmission may include processing for delivery over a broadcast network, and processing for delivery over a broadband. According to an embodiment, the transmission processor may receive not only the 360 video data, but also the 360 video-related metadata from the metadata processor, and may process the same so as to be transmitted.

The transmitter may transmit, over a broadcast network and/or a broadband, the 360 video data and/or 360 video-related metadata processed for transmission. The transmitter may include an element for transmission over a broadcast network and/or an element for transmission over a broadband.

According to an embodiment, the 360 video transmission apparatus may further include a data storage unit (not shown) as an internal/external element. The data storage unit may store the encoded 360 video data and/or 360 video-related metadata before transmitting the same to the transmission processor. These data may be stored in a file format such as ISOBMFF. When a 360 video is transmitted in real time, the data storage unit may not be needed. However, when the video is transmitted on-demand, in NRT (Non Real Time), or over a broadband. The encapsulated 360 data may be stored in the data storage unit for a certain period of time and then transmitted.

According to another embodiment, the 360 video transmission apparatus may further include a (transmitting-side) feedback processor and/or a network interface (not shown) as internal/external elements. The network interface may receive feedback information from the 360 video reception apparatus according to the present disclosure, and deliver the same to the transmitting-side feedback processor. The transmitting-side feedback processor may deliver the feedback information to the stitcher, the projection processor, the region-wise packing processor, the data encoder, the encapsulation processor, the metadata processor, and/or the transmission processor. According to an embodiment, after the feedback information is delivered to the metadata processor, it may in turn be delivered to each internal element. The internal elements that receive the feedback information may reflect the feedback information in subsequent processing of the 360 video data.

According to another embodiment of the 360 video transmission apparatus, the region-wise packing processor may rotate each region and map the same onto a 2D image. In this operation, the respective regions may be rotated at different angles in different directions, and then mapped onto the 2D image. The rotation of the regions may be performed in consideration of a portion that neighbored the 360 video data on the spherical surface or was stitched before projection. Information about the rotation of the regions, that is, the rotation directions, angles, and the like, may be signaled by 360 video-related metadata. According to another embodiment of the 360 video transmission apparatus, the data encoder may perform encoding differently for each region. The data encoder may encode a specific region with high quality and other regions with low quality. The transmitting-side feedback processor may deliver the feedback information received from the 360 video reception apparatus to the data encoder, such that the data encoder uses a differentiated encoding method for each region. For example, the transmitting-side feedback processor may deliver the viewport information received from the receiving side to the data encoder. The data encoder may encode regions including an area indicated by the viewport information with higher quality (UHD, etc.) than the other regions.

According to another embodiment of the 360 video transmission apparatus, the transmission processor may perform processing for transmission differently for each region. The transmission processor may apply different transmission parameters (modulation order, code rate, etc.) for the respective regions, such that the data transmitted for each region may have different robustness.

Then, the transmitting-side feedback processor may deliver the feedback information received from the 360 video reception apparatus to the transmission processor, such that the transmission process performs the differentiated transmission processing for each region. For example, the transmitting-side feedback processor may deliver viewport information received from the receiving side to the transmission processor. The transmission processor may perform processing for transmission on regions including an area indicated by the viewport information, such that the regions may have higher robustness than the other regions.

The internal/external elements of the 360 video transmission apparatus described above may be hardware elements implemented in hardware. According to an embodiment, the internal/external elements may be changed, omitted, or replaced with other elements. According to an embodiment, supplemental elements may be added to the 360 video transmission apparatus.

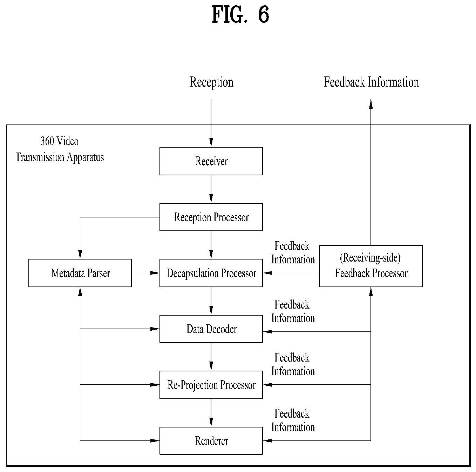

FIG. 6 is a diagram schematically illustrating a configuration of a 360 video reception apparatus according to an embodiment.

According to an embodiment, the 360 video reception apparatus may perform operations related to the processing process and/or the rendering process described above. The 360 video reception apparatus may include a receiver, a reception processor, a decapsulation processor, a data decoder, a metadata parser, a (receiving-side) feedback processor, a re-projection processor, and/or a renderer as internal/external elements. A signaling parser may be referred to as a metadata parser.

The receiver may receive 360 video data transmitted by the 360 video transmission apparatus according to an embodiment. Depending on the transmission channel, the receiver may receive 360 video data over a broadcast network or a broadband.

The reception processor may process the received 360 video data according to a transport protocol. The reception processor may perform the reverse of the process of the above-described transmission processor such that the reverse process corresponds to the processing for transmission on the transmitting side. The reception processor may deliver the acquired 360 video data to the decapsulation processor, and deliver the acquired 360 video-related metadata to the metadata parser. The 360 video-related metadata acquired by the reception processor may be in the form of a signaling table.

The decapsulation processor may decapsulate the 360 video data received in the form of a file from the reception processor. The decapsulation processor may decapsulate the files according to ISOBMFF or the like to acquire the 360 video data or 360 video-related metadata. The acquired 360 video data may be delivered to the data decoder, and the acquired 360 video-related metadata may be delivered to the metadata parser. The 360 video-related metadata acquired by the decapsulation processor may be in the form of a box or track in the file format. When necessary, the decapsulation processor may receive metadata needed for decapsulation from the metadata parser.

The data decoder may decode the 360 video data. The data decoder may receive metadata needed for decoding from the metadata parser. The 360 video-related metadata acquired in the data decoding process may be delivered to the metadata parser.

The metadata parser may parse/decode the 360 video-related metadata. The metadata parser may deliver the acquired metadata to the data decapsulation processor, the data decoder, the re-projection processor, and/or the renderer.

The re-projection processor may re-project the decoded 360 video data. The re-projection processor may re-project the 360 video data onto a 3D space. The shape of the 3D space may depend on the employed 3D model. The re-projection processor may receive metadata needed for re-projection from the metadata parser. For example, the re-projection processor may receive information about the type of the employed 3D model and the corresponding detailed information from the metadata parser. According to an embodiment, the re-projection processor may re-project only 360 video data corresponding to a specific area in the 3D space onto the 3D space using the metadata needed for re-projection.

The renderer may render the re-projected 360 degree video data. As described above, the 360 video data may be rendered in the 3D space. In the case where the two processes occur at once as described above, the re-projection processor and the renderer may be integrated, and the processes may all be performed by the renderer. According to an embodiment, the renderer may render only a part that the user is viewing according to the viewing position information about the user.

The user may view some areas of the rendered 360 video through a VR display or the like. The VR display is a device that plays back the 360 video, and may be included in the 360 video reception apparatus (in a tethered state) or connected to the 360 video reception apparatus as a separate device (in an un-tethered state).

According to an embodiment, the 360 video reception apparatus may further include a (receiving-side) feedback processor and/or a network interface (not shown) as internal/external elements. The receiving-side feedback processor may acquire feedback information from the renderer, the re-projection processor, the data decoder, the decapsulation processor, and/or the VR display, and process the same. The feedback information may include viewport information, head orientation information, and gaze information. The network interface may receive the feedback information from the receiving-side feedback processor and transmit the same to the 360 video transmission apparatus.

As described above, the feedback information may not only be delivered to the transmitting side, but also be consumed at the receiving side. The receiving-side feedback processor may deliver the acquired feedback information to internal elements of the 360 video reception apparatus such that the information may be reflected in processes such as rendering. The receiving-side feedback processor may deliver the feedback information to the renderer, the re-projection processor, the data decoder and/or the decapsulation processor. For example, the renderer may preferentially render an area viewed by a user based on the feedback information. The decapsulation processor and the data decoder may preferentially decapsulate and decode the area that is being viewed or to be viewed by the user.

The internal/external elements of the 360 video reception apparatus according to the embodiment described above may be hardware elements implemented in hardware. According to an embodiment, the internal/external elements may be changed, omitted, or replaced with other elements. According to an embodiment, supplemental elements may be added to the 360 video reception apparatus.

In another aspect, the operation method of the 360 video reception apparatus according to the above-described embodiment may be related to a method of transmitting 360 video and a method of receiving 360 video. The methods of transmitting/receiving a 360 video according to an embodiment may be implemented by the 360 video transmission/reception apparatuses according to the above-described embodiment or by the embodiments of the apparatuses.

The embodiments of the 360 video transmission/reception apparatuses, the transmission/reception methods, and the internal/external elements thereof according to the above-described embodiment may be combined with each other. For example, the embodiments of the projection processor and the embodiments of the data encoder may be combined with each other to configure as many embodiments of the 360 video transmission apparatus as the combinations.

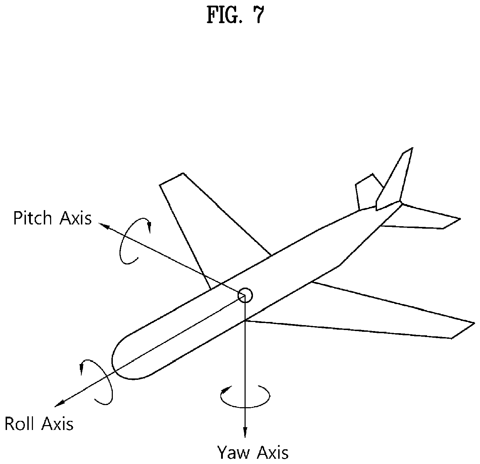

FIG. 7 is a diagram illustrating the concept of aircraft principal axes for describing a 3D space according to an embodiment.

In the present disclosure, the concept of aircraft principal axes may be used to express a specific point, position, direction, spacing, area, and the like in a 3D space. That is, in the present disclosure, the concept of 3D space given before or after projection may be described, and the concept of aircraft principal axes may be used to perform signaling thereon. According to an embodiment, a method based on a Cartesian coordinate system emplying X, Y, and Z axes or a spherical coordinate system may be used.

An aircraft may rotate freely in three dimensions. The three-dimensional axes are called a pitch axis, a yaw axis, and a roll axis, respectively. In this specification, these axes may be simply expressed as pitch, yaw, and roll or as a pitch direction, a yaw direction, a roll direction.

In one example, the roll axis may correspond to the X-axis or back-to-front axis of the Cartesian coordinate system. Alternatively, the roll axis may be an axis extending from the front nose to the tail of the aircraft in the concept of aircraft principal axes, and rotation in the roll direction may refer to rotation about the roll axis. The range of roll values indicating the angle rotated about the roll axis may be from -180 degrees to 180 degrees, and the boundary values of -180 degrees and 180 degrees may be included in the range of roll values.

In another example, the pitch axis may correspond to the Y-axis or side-to-side axis of the Cartesian coordinate system. Alternatively, the pitch axis may refer to an axis around which the front nose of the aircraft rotates upward/downward. In the illustrated concept of aircraft principal axes, the pitch axis may refer to an axis extending from one wing to the other wing of the aircraft. The range of pitch values, which represent the angle of rotation about the pitch axis, may be between -90 degrees and 90 degrees, and the boundary values of -90 degrees and 90 degrees may be included in the range of pitch values.

In another example, the yaw axis may correspond to the Z axis or vertical axis of the Cartesian coordinate system. Alternatively, the yaw axis may refer to a reference axis around which the front nose of the aircraft rotates leftward/rightward. In the illustrated concept of aircraft principal axes, the yaw axis may refer to an axis extending from the top to the bottom of the aircraft. The range of yaw values, which represent the angle of rotation about the yaw axis, may be from -180 degrees to 180 degrees, and the boundary values of - 180 degrees and 180 degrees may be included in the range of yaw values.

In 3D space according to an embodiment, a center point that is a reference for determining a yaw axis, a pitch axis, and a roll axis may not be static.

As described above, the 3D space in the present disclosure may be described based on the concept of pitch, yaw, and roll.

As described above, the video data projected on a 2D image may be subjected to the region-wise packing process in order to increase video coding efficiency and the like. The region-wise packing process may refer to a process of dividing the video data projected onto the 2D image into regions and processing the same according to the regions. The regions may refer to regions obtained by dividing the 2D image onto which 360-degree video data is projected. The divided regions of the 2D image may be distinguished by projection schemes. Here, the 2D image may be called a video frame or a frame.

In this regard, the present disclosure proposes metadata for the region-wise packing process according to a projection scheme and a method of signaling the metadata. The region-wise packing process may be more efficiently performed based on the metadata.

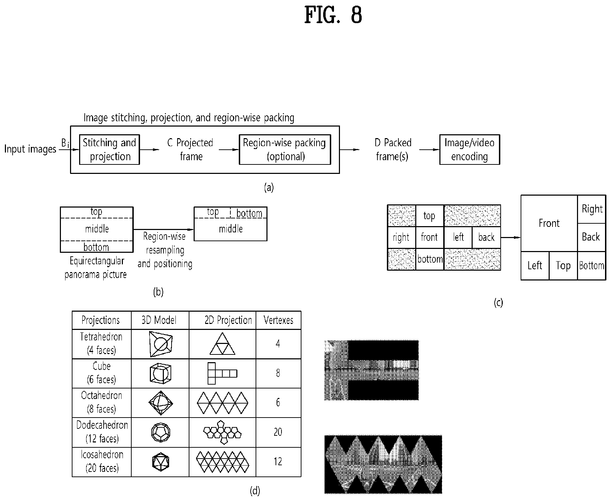

FIG. 8 exemplarily illustrates a 2D image to which a 360 video processing process and a projection format-based region-wise packing process are applied.

FIG. 8(a) may illustrate a process of processing input 360-degree video data. Referring to FIG. 8(a), 360-degree video data of the input viewing position may be stitched and projected onto a 3D projection structure according to various projection schemes. The 360-degree video data projected onto the 3D projection structure may be represented as a 2D image. That is, the 360 video data may be stitched and projected into the 2D image. The 2D image into which the 360 video data is projected may be represented as a projected frame. In addition, the above-described may be performed on the projected frame. That is, processing such as dividing an area including the projected 360 video data on the projected frame into regions, rotating or rearranging each region, or changing the resolution of each region may be performed. In other words, the region-wise packing process may represent a process of mapping the projected frame to one or more packed frames. Performing the region-wise packing process may be optional. When the region-wise packing process is skipped, the packed frame may be identical to the projected frame. When the region-wise packing process is applied, each region of the projected frame may be mapped to a region of the packed frame, and metadata indicating the position, shape, and size of the region of the packed frame to which each region of the projected frame is mapped may be derived.

FIGS. 8(b) and 8(c) may show examples in which each region of the projected frame is mapped to a region of the packed frame. Referring to FIG. 8(b), the 360 video data may be projected into a 2D image (or frame) according to a panoramic projection scheme. The top region, middle region, and bottom region of the projected frame may be subjected to a region-wise packing process and rearranged as shown on the right side of the figure. Here, the top region may represent the top surface of the panorama on a 2D image, the middle region may represent the middle surface of the panorama on the 2D image, and the bottom region may represent the bottom surface of the panorama on the 2D image. Referring to FIG. 8(c), the 360 video data may be projected into a 2D image (or frame) according to a cubic projection scheme. The front region, the back region, the top region, the bottom region, the right region, and the left region of the projected frame may be subjected to the region-wise packing process and rearranged as shown on the right side of the figure. Here, the front region may represent the front face of the cube on the 2D image, and the back region may represent the back face of the cube on the 2D image. In addition, the top region may represent the top face of the cube on the 2D image, and the bottom region region may represent the bottom face of the cube on the 2D image. The right region may represent the right face of the cube on the 2D image, and the left region may represent the left face of the cube on the 2D image.

FIG. 8(d) may show various 3D projection formats in which the 360 video data may be projected. Referring to FIG. 8(d), the 3D projection formats may include tetrahedron, cube, octahedron, dodecahedron, and icosahedron. The 2D projections shown in FIG. 8(d) may represent projected frames representing 360 video data projected onto a 3D projection format as a 2D image.

According to an embodiment, as the projection formats, for example, some or all of various projection formats (or projection schemes) may be used. A projection format used for 360 video may be indicated through, for example, the projection format field of metadata.

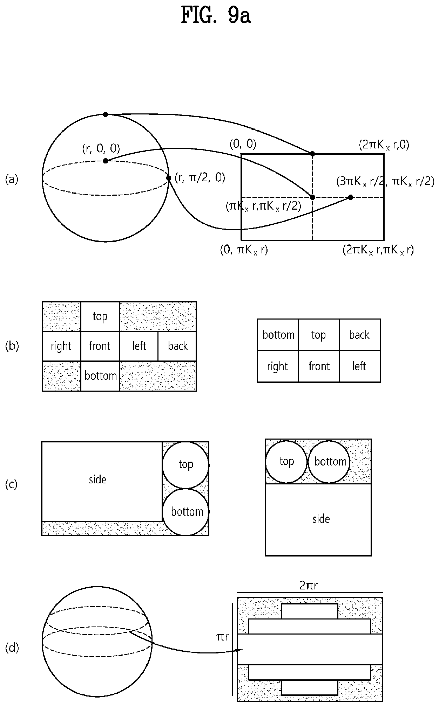

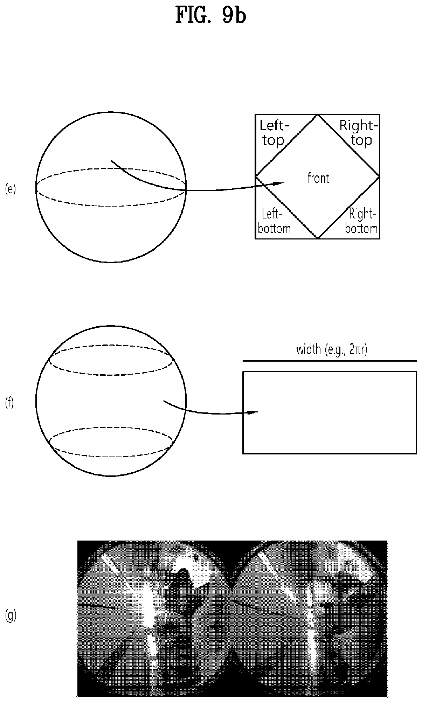

FIGS. 9A and 9B exemplarily show projection formats according to some embodiments.

FIG. 9A(a) may show an equilateral projection format. When the equilateral projection format is used, a point $(r, \theta_0, 0)$ on the spherical surface, that is, a point with $\theta = \theta_0$ and $\varphi = 0$, may be mapped to a center pixel of the 2D image. In addition, the principal point of the front camera may be assumed to be the point $(r, 0, 0)$ on the spherical surface. Also, $\varphi_0$ may be fixed to $\varphi_0 = 0$. Accordingly, the value $(x, y)$ obtained by transformation into the XY coordinate system may be transformed into a pixel $(X, Y)$ on the 2D image by the following equation.

$$\text{Equation 1}$$

$$X = K_x * x + X_O = K_x * (\theta - \theta_0) * r + X_O$$

$$Y = -K_y * y - Y_O$$

In addition, when the left top pixel of the 2D image is positioned at (0,0) of the XY coordinate system, the offset value along the x-axis and the offset value along the y-axis may be given by the following equation.

$$\text{Equation 2}$$

$$X_O = K_x * \pi * r$$

$$Y_O = -K_y * \pi / 2 * r$$

Based on this equation, the equation for a transformation into to the XY coordinate system may be given as follows.

$$\text{Equation 3}$$

$$X = K_x x + X_O = K_x * (\pi + \theta - \theta_0) * r$$

$$Y = -K_y y - Y_O = K_y * (\pi / 2 - \varphi) * r$$

For example, when $\theta_0 = 0$, that is, when the center pixel of the 2D image indicates data with $\theta = 0$ on a spherical surface, the spherical surface may be mapped to an area having a width $= 2K_x \pi r$ and a height $= K_x \pi r$ in the 2D image with respect to (0,0). Data having $\varphi = \pi/2$ on the spherical surface may be mapped to the entire top side of the 2D image. In addition, data of $(r, \pi/2, 0)$ on the spherical surface may be mapped to a point $(3\pi K_x r/2, \pi K_x r/2)$ on the 2D image.

On the receiving side, 360 video data on the 2D image may be re-projected onto a spherical surface. The transformation question for this operation may be given as follows.

$$\text{Equation 4}$$

$$\theta = \theta_0 + X / K_x * r - \pi$$

$$\varphi = \pi / 2 - Y / K_y * r$$

For example, on a 2D image, a pixel whose XY coordinate value is $(Kx\pi r, 0)$ may be re-projected to a point where $\theta = \theta 0$ and $\varphi = \pi/2$ on a spherical surface.

FIG. 9A(b) may show a cubic projection format. For example, stitched 360 video data may be displayed on a spherical surface. The projection processor may divide the 360 video data in a cube shape to project the same onto a 2D image. The 360 video data on the spherical face may correspond to each face of the cube, and may be projected onto the 2D image as shown on the left side or right side of (b) in FIG. 9A.

FIG. 9A(c) may show a cylindrical projection format. Assuming that the stitched 360 video data can be displayed on a spherical surface, the projection processor may divide the 360 video data in a cylinder shape and project the same onto a 2D image. The 360 video data on the spherical surface may correspond to the side, top, and bottom of the cylinder, respectively, and may be projected onto the 2D image as shown on the left side or right side of (c) in FIG. 9A.

FIG. 9A(d) may show a tile-based projection format. When a tile-based projection scheme is used, the above-described projection processor may divide the 360 video data on the spherical surface into one or more detailed regions as shown in FIG. 9A(d) to project the same onto a 2D image. The detailed regions may be referred to as tiles.

FIG. 9B(e) may show a pyramid projection format. When it is assumed that the stitched 360 video data can be displayed on a spherical surface, the projection processor may consider the 360 video data to have a pyramid shape and divide the respective faces thereof to project the same onto a 2D image. The 360 video data on the spherical surface may correspond to the front side of the pyramid and the four sides (left top, left bottom, right top, right bottom) of the pyramid, respectively, and may be projected as shown on the left side or right side of (e) in FIG. 8. Here, the front may be an area including data acquired by a camera facing forward.

FIG. 9B(f) may show a panoramic projection format. When a panoramic projection format is used, the above-described projection processor may project, onto a 2D image, only a side surface of the 360 video data on a spherical surface, as shown in FIG. 9B(f). This may be the same as the case where the top and bottom are not present in the cylindrical projection scheme.

According to an embodiment, projection may be performed without stitching. FIG. 9B(g) may show a case where projection is performed without stitching. When projection is performed without stitching, the above-described projection processor may project 360 video data onto a 2D image as shown in FIG. 9B(g). In this case, stitching may be skipped, and each image acquired by the camera may be projected directly onto the 2D image.

Referring to FIG. 9B(g), two images may be projected onto a 2D image without stitching. Each image may be a fish-eye image acquired through each sensor in a spherical camera (or a fish-eye camera). As described above, the receiving side may stitch the image data acquired from the camera sensors, and map the stitched image data onto a spherical surface to render a spherical video, that is, 360 video.

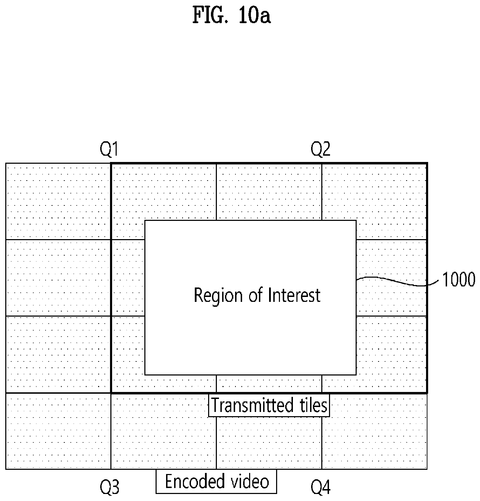

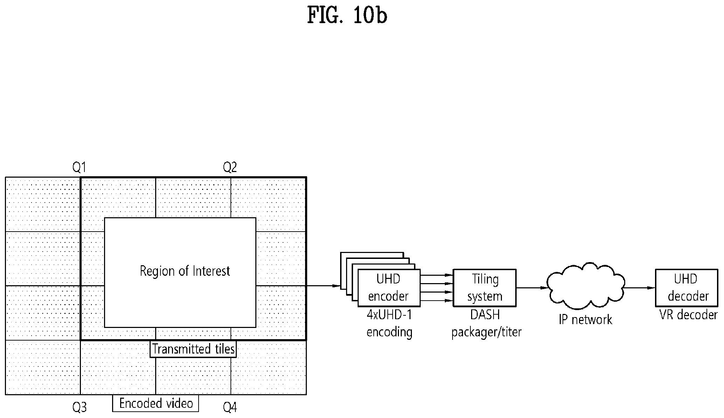

FIGS. 10A and 10B are diagrams illustrating tiles according to some embodiments.

The 360 video data obtained after being projected onto a 2D image or and then subjected to region-wise packing may be divided into one or more tiles. FIG. 10A shows that one 2D image is divided into 16 tiles. Here, the 2D image may be the aforementioned projected frame or packed frame. According to another embodiment of the 360 video transmission apparatus of the present disclosure, the data encoder may independently encode each tile.

The region-wise packing and tiling described above be distinguished from each other. The region-wise packing may refer to dividing 360 video data projected onto a 2D image into regions and processing the regions to improve coding efficiency or to adjust resolution. The tiling may referred to an operation of the data decoder of dividing the projected frame or the packed frame into sections called tiles and independently encoding each tile. When 360 video is provided, the user does not consume all parts of the 360 video simultaneously. The tiling may make it possible to transmit or consume only tiles corresponding to an important part or a certain part, such as a viewport currently viewed by a user, to on the receiving side on a limited bandwidth. When tiling is performed, the limited bandwidth may be utilized more efficiently, and the receiving side may reduce the computational load compared to a case where all 360 video data are processed at once.

A region and a tile are distinguished from each other, and accordingly the region and the tile do not need to be the same. However, according to an embodiment, the region and the tile may refer to the same area. According to an embodiment, region-wise packing is performed according to a tile, and thus the region and the tile may be the same. According to an embodiment, when each face according to the projection scheme and a region are the same, each face according to the projection scheme, the region, and the tile may refer to the same area. Depending on the context, a region may be called a VR region, or a tiled may be called as a tile region.

A region of interest (ROI) may refer to an area of interest of users, as suggested by a 360 content provider. In producing a 360 video, the 360 content provider may create the 360 video, assuming that users will be interested in a certain area. According to an embodiment, the ROI may correspond to an area in which important content is played in the content of the 360 video.

According to another embodiment of the 360 video transmission/reception apparatus, the receiving-side feedback processor may extract and collect viewport information and transmit the same to the transmitting-side feedback processor. In this process, viewport information may be transferred between both sides using both network interfaces. In the 2D image of FIG. 10A, a viewport 1000 is displayed. Here, the viewport may span 9 tiles on the 2D image.

In this case, the 360 video transmission apparatus may further include a tiling system. According to an embodiment, the tiling system may be arranged next to the data encoder (as shown in FIG. 10B), may be included in the above-described data encoder or transmission processor, or may be included in the 360 video transmission apparatus as a separate internal/external element.

The tiling system may receive viewport information from the feedback processor of the transmitting side. The tiling system may select and transmit only tiles including the viewport region. In the 2D image shown in FIG. 10A, only 9 tiles including the viewport region 1000 among the 16 tiles may be transmitted. Here, the tiling system may transmit the tiles over broadband in a unicast manner. This is because the viewport region varies among users.

In this case, the transmitting-side feedback processor may deliver the viewport information to the data encoder. The data encoder may encode the tiles including the viewport region with higher quality than the other tiles.

In this case, the transmitting-side feedback processor may deliver the viewport information to the metadata processor. The metadata processor may deliver metadata related to the viewport region to each internal element of the 360 video transmission apparatus, or may include the same in the 360 video-related metadata.

As the tiling operation is performed, the transmission bandwidth may be saved, and data processing/transmission may be performed efficiently by performing differentiated processing on each tile.

The above-described embodiments related to the viewport region may be applied to specific regions other than the viewport region in a similar manner. For example, a region that users are determined to be mainly interested in through the gaze analysis described above, the ROI, and a region that is played first when the user views 360 video through a VR display (initial viewpoint) may be processed in the same manner as the viewport region described above.

According to another embodiment of the 360 video transmission apparatus, the transmission processor may process each tile differently for transmission. The transmission processor may apply different transmission parameters (modulation order, code rate, etc.) for the respective tiles, such that the data delivered for each tile may have different robustness.

Then, the transmitting-side feedback processor may deliver the feedback information received from the 360 video reception apparatus to the transmission processor, such that the transmission processor performs differentiated processing on each tile for transmission. For example, the transmitting-side feedback processor may deliver viewport information received from the receiving side to the transmission processor. The transmission processor may perform processing for transmission on the tiles including the viewport region, such that the tiles may have higher robustness than the other tiles.

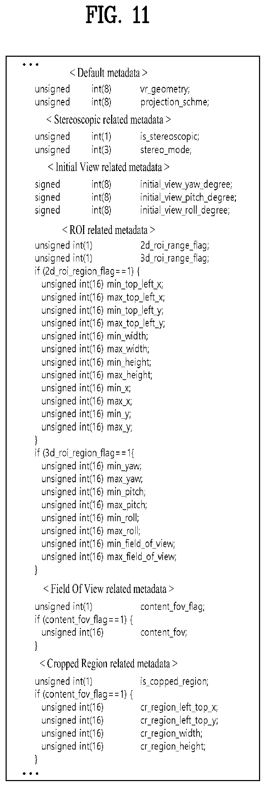

FIG. 11 shows an example of 360-degree video-related metadata according to an embodiment.

As described above, the 360-degree video-related metadata may include various metadata about 360-degree video. Depending on the context, the 360-degree video-related metadata may be referred to as 360-degree video related signaling information. The 360-degree video-related metadata may be transmitted in a separate signaling table, may be transmitted in a DASH MPD, or may be transmitted in the form of a box in a file format such as ISOBMFF. When the 360-degree video-related metadata is included in a box form, it may be included in various levels such as file, fragment, track, sample entry, and sample to include metadata for the data of the corresponding level.

According to an embodiment, a part of the metadata which will described later may be configured and delivered in a signaling table, and the other part thereof may be included in a file format in a box or track form.

According to an embodiment of the 360-degree video-related metadata, the 360-degree video-related metadata may include default metadata related to a projection scheme, stereoscopic related metadata, and initial view/initial viewpoint-related metadata, ROI-related metadata, FOV (Field of View)-related metadata, and/or cropped region-related metadata. According to an embodiment, the 360-degree video-related metadata may further include supplemental metadata.

Embodiments of 360-degree video-related metadata may include at least one of the default metadata, the stereoscopic related metadata, the initial view/viewpoint-related metadata, the ROI-related metadata, the FOV-related metadata, the cropped region-related metadata, and/or metadata that may be added later. Embodiments of the 360-degree video-related metadata according to the present disclosure may be configured in various ways according to the number of cases of detailed metadata included in each embodiment. According to an embodiment, the 360-degree video-related metadata may further contain supplemental information in addition to the above-described information.

The stereo_mode field may indicate a 3D layout supported by the corresponding 360-degree video. Only this field may indicate whether the 360-degree video supports the 3D layout. In this case, the is_stereoscopic field described above may be omitted. When the value of this field is 0, the 360-degree video may be in the mono mode. That is, the projected 2D image may include only one mono view. In this case, the 360-degree video may not support the 3D layout.

When the value of this field is 1 or 2, the 360-degree video may conform to a left-right layout and a top-bottom layout, respectively. The left-right layout and the top-bottom layout may also be called a side-by-side format and a top-bottom format, respectively. In the left-right layout, 2D images onto which the left/right images are projected may be positioned on the left and right in the image frame, respectively. In the top-bottom layout, the 2D images onto which the left/right images are projected may be positioned at the top and bottom of the image frame, respectively. When the other values for the field may be reserved for future use.

The initial view-related metadata may include information about a view (initial viewpoint) of the user when the 360-degree video is initially played. The initial view-related metadata may include an initial_view_yaw_degree field, an initial_view_pitch_degree field, and/or an initial_view_roll_degree field. According to an embodiment, the initial view-related metadata may further include supplemental information.

The initial_view_yaw_degree field, the initial_view_pitch_degree field, and the initial_view_roll_degree field may indicate an initial view in playing back a corresponding 360-degree video. That is, the center point of the viewport that is initially displayed in playback may be indicated by these three fields. Specifically, the initial_view_yaw_degree field may indicate a yaw value for the initial view. That is, the initial_view_yaw_degree field may indicate the direction (sign) and degree (angle) of rotation of the position of the center point about the yaw axis. The initial_view_pitch_degree field may indicate a pitch value for the initial view. That is, the initial_view_pitch_degree field may indicate the direction (sign) and degree (angle) of rotation of the position of the center point about the pitch axis. The initial_view_roll_degree field may indicate a roll value for the initial view. That is, the initial_view_roll_degree field may indicate the direction (sign) and degree (angle) of rotation of the position of the center point about the roll axis. Based on the initial_view_yaw_degree field, the initial_view_pitch_degree field, and the initial_view_roll_degree field, an initial view in playing back a 360-degree video, that is, a center point of a viewport initially displayed in playback may be indicated. Thereby, a specific region of the 360-degree video may be displayed and provided to the user at the initial viewpoint. In addition, based on the field of view (FOV), the width and height of the initial viewport with respect to the indicated initial view may be determined. That is, using these three fields and the FOV information, the 360-degree video reception apparatus may provide the user with a certain region of the 360-degree video as an initial viewport.

According to an embodiment, the initial view indicated by the initial view-related metadata may vary among scenes. That is, the scene of the 360-degree video changes according to the temporal flow of the 360 content, and the initial view or initial viewport that the user sees first may vary among the scenes of the 360-degree video. In this case, the initial view-related metadata may indicate an initial view for each scene. To this end, the initial view-related metadata may further include a scene identifier for identifies a scene to which the corresponding initial view is applied. In addition, since the FOV may vary among the scenes of the 360-degree video, the initial view-related metadata may further include scene-specific FOV information indicating the FOV corresponding to a scene.

The ROI-related metadata may include information related to the ROI described above. The ROI-related metadata may include a 2d_roi_range_flag field and/or a 3d_roi_range_flag field. The 2d_roi_range_flag field may indicate whether the ROI-related metadata includes fields representing an ROI based on a 2D image, and the 3d_roi_range_flag field may indicate whether the ROI-related metadata includes fields representing an ROI based on 3D space. According to an embodiment, the ROI-related metadata may further include supplemental information such as differentiated encoding information according to the ROI and differentiated transmission processing information according to the ROI.

When the ROI-related metadata includes the fields representing an ROI based on a 2D image, the ROI-related metadata may include a min_top_left_x field, a max_top_left_x field, a min_top_left_y field, a max_top_left_y field, a min_width field, a max_width field, a min_height field, a max_height field, a min_x field, a max_x field, a min_y field, and/or a max_y field.

The min_top_left_x field, the max_top_left_x field, the min_top_left_y field, and the max_top_left_y field may indicate minimum/maximum values of the coordinates of the top left end of the ROI. That is, the fields may indicate the minimum x coordinate, the maximum x coordinate, the minimum y coordinate, and the maximum y coordinate of the top left end, respectively.

The min_width field, the max_width field, the min_height field, and the max_height field may indicate the minimum/maximum values of the width and height of the ROI. That is, the fields may indicate the minimum value of the width, the maximum value of the width, the minimum value of the height, and the maximum value of the height, respectively.

The min_x field, the max_x field, the min_y field, and the max_y field may indicate the minimum/maximum values of the coordinates in the ROI. That is, the fields may indicate the minimum x coordinate, the maximum x coordinate, the minimum y coordinate, and the maximum y coordinate among the coordinates in the ROI, respectivley. These fields may be omitted.

When the ROI-related metadata includes fields that represent an ROI based on coordinates in the 3D rendering space, the ROI-related metadata may include a min_yaw field, a max_yaw field, a min_pitch field, a max_pitch field, a min_roll field, a max_roll field, a min_field_of_view field, and/or a max_field_of_view field.

The min_yaw field, the max_yaw field, the min_pitch field, the max_pitch field, the min_roll field, and the max_roll field may indicate an area occupied by the ROI in 3D space with the minimum/maximum values of yaw, pitch, and roll. That is, these fields may indicate the minimum value of the amount of rotation about the yaw axis, the maximum value of the amount of rotation about the yaw axis, the minimum value of the amount of rotation about the pitch axis, the maximum value of the amount of rotation about the pitch axis, the minimum value of the amount of rotation about the roll axis, and the maximum value of the amount of rotation about the the roll axis.

The min_field_of_view field and the max_field_of_view field may indicate the minimum/maximum value of the FOV of the corresponding 360-degree video data. FOV may refer to a field of view displayed at a time in playing back the 360-degree video. The min_field_of_view field and the max_field_of_view field may indicate the minimum and maximum values of the FOV, respectively. These fields may be omitted. These fields may be included in FOV-related metadata, which will be described later.

The FOV-related metadata may include information related to the FOV described above. The FOV-related metadata may include a content_fov_flag field and/or a content_fov field. According to an embodiment, the FOV-related metadata may further include supplemental information, such as information related to the minimum/maximum values of the FOV described above.

The content_fov_flag field may indicate whether information about an FOV intended at the time of production of the 360-degree video is present. When the value of this field is 1, the content_fov field may be present.

The content_fov field may indicate information about an FOV intended at the time of production of a corresponding 360-degree video. According to an embodiment, an area of a 360 image to be displayed to the user at one time may be determined based on a vertical or horizontal FOV of the 360-degree video reception apparatus. Alternatively, according to an embodiment, an area of the 360-degree image to be displayed to the user at one time to may be determined considering the FOV information of this field.

The cropped region-related metadata may include information about an area actually containing 360-degree video data in an image frame. The image frame may include an active video area onto which the 360-degree video data is actually projected and an unprojected area. In this case, the active video area may be referred to as a cropped region or a default display region. The active video area is a region where a 360-degree video is actually displayed on a VR display. The 360-degree video reception apparatus or VR display may process/display only the active video area. For example, when the aspect ratio of an image frame is 4:3, only the area of an image frame except a portion of the upper part and the lower part of the image frame may contain 360-degree video data. This area may be referred to as an active video area.

The cropped region-related metadata may include an is_cropped_region field, a cr_region_left_top_x field, a cr_region_left_top_y field, a cr_region_width field, and/or a cr_region_height field. According to an embodiment, the cropped region-related metadata may further include supplemental information.

The is_cropped_region field may be a flag indicating whether the entire area of the image frame is used by a 360-degree video reception apparatus or a VR display. Here, an area to which 360-degree video data is mapped or an area displayed on the VR display may be referred to as an active video area. The is_cropped_region field may indicate whether the entire image frame is an active video area. When only a part of the image frame is an active video area, the following 4 fields may be further added.

The cr_region_left_top_x field, the cr_region_left_top_y field, the cr_region_width field, and the cr_region_height field may indicate an active video area in an image frame. These fields may indicate the x coordinate of the top left of the active video area, the y coordinate of the top left of the active video area, the width of the active video area, and the height of the active video area, respectively. The width and the height may be expressed in units of pixels.

The 360 video-based VR system may provide a visual/aural experience for different viewing orientations with respect to the user's position for the 360 video based on the above-described 360 video processing process. A VR system that provides a visual/aural experience for different viewing orientations at the user's fixed position for the 360 video may be referred to as a 3 degree of freedom (DoF)-based VR system. A VR system capable of providing an extended visual/aural experience for different viewing orientations at different viewpoints or viewing positions may be referred to as a 3DoF+ or 3DoF plus-based VR system.

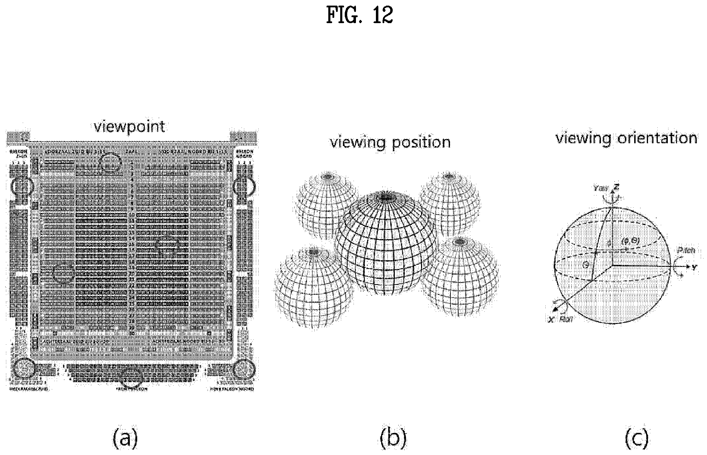

FIG. 12 schematically illustrates the concept of a viewpoint, a viewing position, and a viewing orientation.

Referring to FIG. 12, when a space (e.g., a theater) as shown in (a) is assumed, circles marked in the space may represent different viewpoints. The video/audio provided at the respective viewpoints in the same space may be associated with each other in the same time zone. In this case, different visual/aural experiences may be provided to the user according to change in the user's gaze direction (e.g., head motion) at a specific viewpoint. That is, spheres of various viewing positions as shown in (b) may be assumes for a specific viewpoint, and image/audio/text information reflecting the relative position of each viewing position may be provided.

As shown in (c), at a specific viewing position of a specific viewpoint, visual/aural information for various directions may be delivered as in the case of the existing 3DoF. At this time, a main source (e.g., image/audio/text) and various additional sources may be integrated and provided. In this case, information may be delivered in connection with or independently of the viewing orientation of the user.

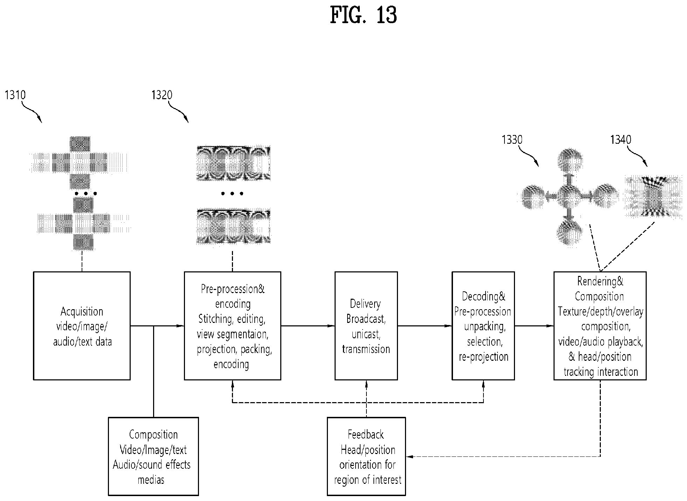

FIG. 13 is a diagram schematically showing an exemplary architecture for providing 3DoF+ video according to an embodiment.

FIG. 13 may show a flow diagram of a 3DoF+ end-to-end system including 3DoF+ image acquisition, pre-processing, transmission, (post) processing, rendering, and feedback processes.

Referring to FIG. 13, the acquisition process may refer to a process of acquiring 360 video through capture, composition, or generation of 360 video. Through this process, multiple pieces of image/audio information according to change in the gaze direction (e.g., head motion) may be acquired for multiple positions. Here, the image information may include depth information as well as visual information (e.g., texture). As illustrated in the example 1310 of image information, multiple pieces of information of different viewing positions according to different viewpoints may be acquired respectively.

The composition process may include a procedure and method for composing video/image, audio/sound effect and text (a subtitle, etc.) from external media as well as the information acquired through an image/audio input device to include the same in the user experience.

The pre-processing process may be a preparation (pre-processing) process for transmitting/delivering the acquired 360 video, and may include the stitching process, the projection process, the region-wise packing process, and/or the encoding process described above. That is, this process may include a pre-processing process and an encoding process for changing/supplementing the image/sound/text information according to the producer's intention. For example, the pre-processing of an image may include an operation of mapping the acquired visual information onto a 360 sphere (stitching), a correction operation of removing an area boundary, reducing a difference in color/brightness, or adding a visual effect to the image (editing), and operation of segmenting an image according to a view (view segmentation), and operation of mapping an image on a 360 sphere to a 2D image (projection), and operation of rearranging the image according to regions (region-wise packing), and an encoding operation of compressing the image information. As illustrated in the example 1320 in a video aspect, multiple projection images of different viewing positions according to different viewpoint may be generated.

The transmission process may refer to a process of processing and transmitting the image/audio data and metadata formed through the preparation process (pre-processing process). As a method of transmitting multiple image/audio data and related metadata of different viewing positions according to different viewpoints, a broadcast network or a communication network may be used as described above, or a unidirectional delivery method may be used.

The post-processing and composition process may refer to a post-processing process for decoding received/stored video/audio/text data and finally playing back the same. For example, the post-processing process may include an unpacking process of unpacking the packed image and a re-projection process of restoring a 3D spherical image from a 2D projected image.

The rendering process may refer to a process of rendering and displaying the re-projected image/video data in 3D space. In this process, the video/audio signal may be reconstructed into a form for final output. The viewing orientation, viewing position/head position, and viewpoint of the user's ROI may be tracked, and only necessary image/audio/text information may be selectively used according to this information. In the case of an image signal, different viewing positions may be selected according to the user's ROI as in the example 1330. Finally, an image of a specific viewing orientation of a specific viewing position at a specific viewpoint, like the example 1340, may be output.

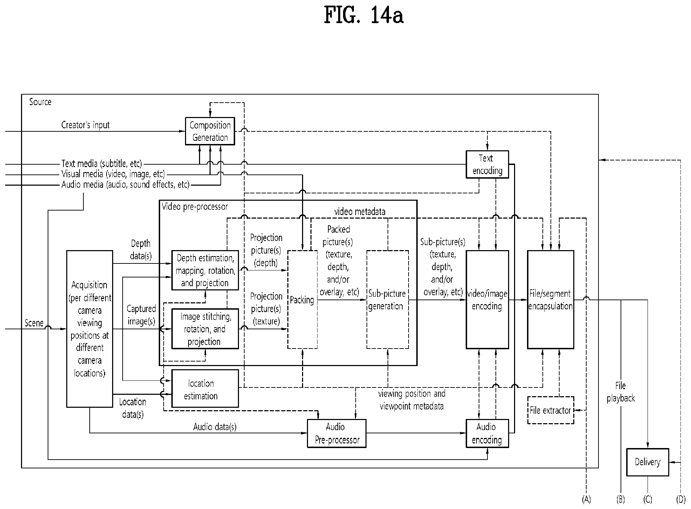

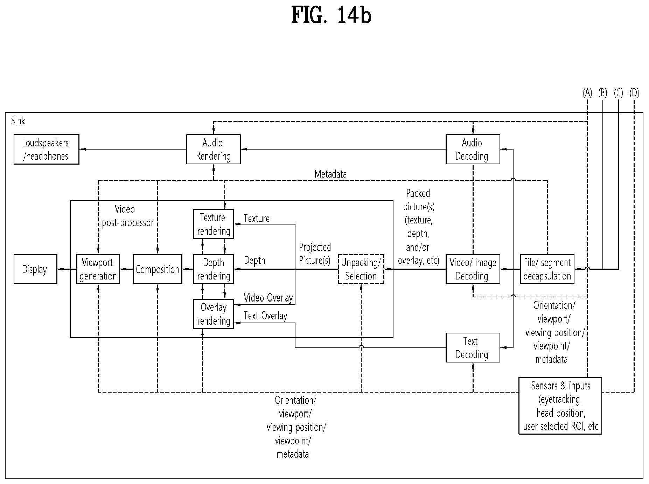

FIGS. 14A and 14B are diagrams illustrating an example of a 3DoF+ end-to-end system architecture.

3DoF+ 360 content as described above may be provided by the architecture of FIGS. 14A and 14B.

Referring to FIG. 14A, a 360 video transmission apparatus (transmission terminal) may include a acquisition unit configured to acquire 360 video (image)/audio data, a video/audio pre-processor configured to process the acquired data, and a composition generation unit configured to compose supplemental information, an encoding unit configured to encode text, audio, and a projected 360-degree video, an encapsulation unit configured to encapsulate the encoded data. As described above, the encoded data may be output in the form of a bitstream. The encoded data may be encapsulated in a file format such as ISOBMFF or CFF, or may be processed in the form of other DASH segments. The encoded data may be delivered to a 360 video reception apparatus through a digital storage medium. Alternatively, although not explicitly shown, the encoded data may be processed for transmission through a transmission processor as described above, and then transmitted over a broadcasting network or broadband.

The data acquisition unit may acquire different pieces of information simultaneously or sequentially according to the sensor orientation (or viewing orientation for an image), sensor position for acquisition of information (or a viewing position for an image), and sensor information acquisition location (a viewpoint for an image). At this time, video, image, audio, and location information may be acquired.

In the case of image data, texture and depth information may be repectively acquired, and different video pre-processing may be performed thereon according to characteristics of each component. For example, in the case of the texture information, a 360 omnidirectional image may be constructed using images of different viewing orientations of the same viewing position acquired at the same viewpoint based on the image sensor location information. To this end, an image stitching process may be performed. In addition, projection and/or region-wise packing for changing the image to a format for encoding may be performed. In the case of a depth image, an image may generally be acquired through a depth camera. In this case, a depth image may be created in a form such as a texture. Alternatively, depth data may be generated based on separately measured data. After the images for the respective components are generated, sub-picture generation may be performed by performing additional packing into a video format for efficient compression or dividing the image into parts that are actually needed. Information about the video configuration used in the video pre-processing stage is delivered through video metadata.

When additionally given image/audio/text information is provided along with the acquired data (or data for a main service), information for composing such information at the time of final playback needs to be provided. The composition generation unit generates, based on the creator's intention, information for composing externally generated media data (video/image for visual media, audio/sound effect for audio media, and a subtitle for text) in the final playback stage. This information is delivered as composition metadata.

The image/audio/text information obtained after each process is compressed using each encoder and encapsulated in a file unit or a segment unit depending on the application. In this case, only necessary information may be extracted (by a file extractor) according to the video, file, or segment configuration method.

In addition, information for reconstructing each data in the receiver is delivered at a codec or file format/system level. This information includes information for video/audio reconstruction (video/audio metadata), composition information for overlay (composition metadata), video/audio playable position (viewpoint), and viewing position information (viewing position and viewpoint metadata) for each viewpoint. Such information may be generated through a separate metadata processor.

Referring to FIG. 14B, a 360 video reception apparatus (reception terminal) may include a file/segment decapsulation unit configured to decapsulate a received file or segment, a decoding unit configured to generate video/audio/text information from a bitstream, a post-processor configured to reconstruct image/audio/text in a form for playback, a tracking unit configured to track a user's ROI, and a display that is a playback device.

The bitstream generated through decapsulation may be divided into image/audio/text according to the type of data and separately decoded into a playable form.

The tracking unit may generate information about a viewpoint of the user's region of interest, a viewing position at the viewpoint, and a viewing orientation at the viewing position based on the input information of the sensor and the user. This information may be used for selection or extraction of a region of interest by each module of the 360 video reception apparatus, or may be used for a post-processing process for emphasizing information about the region of interest. When delivered to the 360 video transmission apparatus, the information may be used for file extraction or sub-picture selection for efficient bandwidth use, and various ROI-based image reconstruction methods (viewport/viewing position/viewpoint dependent processing).

The decoded image signal may be processed using various processing methods according to an image configuration method. When image packing is performed by the 360 video transmission apparatus, a process of reconstructing an image based on the information delivered through metadata is needed. In this case, video metadata generated by the 360 video transmission apparatus may be used. In addition, the location of the user's region of interest generated through tracking, when images of multiple viewpoints, multiple viewing positions, or various viewing orientations are included in the decoded image, information matching the viewpoint, viewing position and viewing orientation of the user's ROI may be selected and processed. At this time, the viewing position and viewpoint related metadata generated by the transmission terminal may be used. When multiple components are delivered for a specific viewpoint, viewing position, or viewing orientation, or video information for overlay is separately delivered, a rendering process based thereon may be included. The video data (texture, depth, overlay) that has undergone the separate rendering process is subjected to a composition process. At this time, composition metadata generated by the transmission terminal may be used. Finally, information for playback in a viewport may be generated according to the user's ROI.

A playable audio signal may be generated from the decoded audio signal through an audio renderer and/or a post-processing process. At this time, based on the information about the user's ROI and the metadata delivered to the 360 video reception apparatus, information meeting the user's request may be generated.

The decoded text signal may be delivered to an overlay renderer and processed as text-based overlay information such as a subtitle. A separate text post-processing process may be included when necessary.

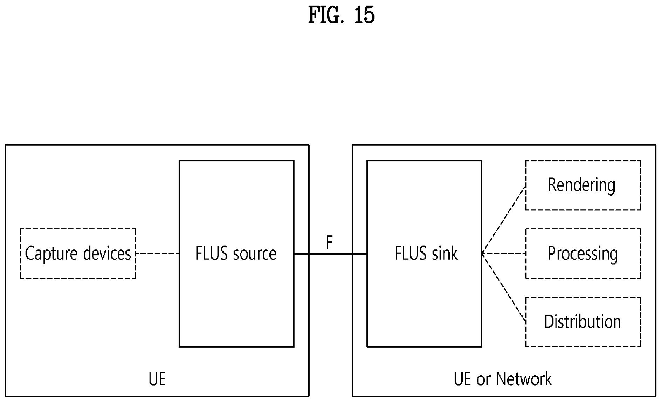

FIG. 15 is a diagram schematically illustrating an example of a FLUS architecture.

FIG. 15 illustrates an example of communication performed between user equipments (UEs) or between a UE and a network based on Framework for Live Uplink Streaming (FLUS) in a wireless communication system. The FLUS source and the FLUS sink may transmit and receive data to and from each other using an F reference point.

In this specification, "FLUS source" may refer to a device configured to transmit data to an FLUS sink through the F reference point based on FLUS. However, the FLUS source does not always transmit data to the FLUS sink. In some cases, the FLUS source may receive data from the FLUS sink through the F reference point. The FLUS source may be construed as a device identical/similar to the image transmission apparatus or 360 video transmission apparatus described herein, as including the image transmission apparatus or 360 video transmission apparatus, or as being included in the image transmission apparatus or 360 video transmission apparatus. The FLUS source may be, for example, a UE, a network, a server, a cloud server, a set-top box (STB), a base station, a PC, a desktop, a laptop, a camera, a camcorder, a TV, or the like, and may be an element or module included in the illustrated apparatuses. Further, devices similar to the illustrated apparatuses may also operate as a FLUS source. Examples of the FLUS source are not limited thereto.

In this specification, "FLUS sink" may refer to a device configured to receive data from an FLUS source through the F reference point based on FLUS. However, the FLUS sink does not always receive data from the FLUS source. In some cases, the FLUS sink may transmit data to the FLUS source through the F reference point. The FLUS sink may be construed as a device identical/similar to the image reception apparatus or 360 video reception apparatus described herein, as including the image reception apparatus or 360 video reception apparatus, or as being included in the image reception apparatus or 360 video reception apparatus. The FLUS sink may be, for example, a network, a server, a cloud server, an STB, a base station, a PC, a desktop, a laptop, a camera, a camcorder, a TV, or the like, and may be an element or module included in the illustrated apparatuses. Further, devices similar to the illustrated apparatuses may also operate as a FLUS sink. Examples of the FLUS sink are not limited thereto.

While the FLUS source and the capture devices are illustrated in FIG. 15 as constituting one UE, embodiments are not limited thereto. The FLUS source may include capture devices. In addition, a FLUS source including the capture devices may be a UE. Alternatively, the capture devices may not be included in the UE, and may transmit media information to the UE. The number of capture devices may be greater than or equal to one.

While the FLUS sink, a rendering module (or unit), a processing module (or unit), and a distribution module (or unit) are illustrated in FIG. 15 as constituting one UE or network, embodiments are not limited thereto. The FLUS sink may include at least one of the rendering module, the processing module, and the distribution module. In addition, a FLUS sink including at least one of the rendering module, the processing module, and the distribution module may be a UE or a network. Alternatively, at least one of the rendering module, the processing module, and the distribution module may not be included in the UE or the network, and the FLUS sink may transmit media information to at least one of the rendering module, the processing module, and the distribution module. At least one rendering module, at least one processing module, and at least one distribution module may be configured. In some cases, some of the modules may not be provided.

In one example, the FLUS sink may operate as a media gateway function (MGW) and/or application function (AF).

In FIG. 15, the F reference point, which connects the FLUS source and the FLUS sink, may allow the FLUS source to create and control a single FLUS session. In addition, the F reference point may allow the FLUS sink to authenticate and authorize the FLUS source. Further, the F reference point may support security protection functions of the FLUS control plane F-C and the FLUS user plane F-U.

In one embodiment, the FLUS source and the FLUS sink may each include a FLUS ctrl module. The FLUS ctrl modules of the FLUS source and the FLUS sink may be connected via the F-C. The FLUS ctrl modules and the F-C may provide a function for the FLUS sink to perform downstream distribution on the uploaded media, provide media instantiation selection, and support configuration of the static metadata of the session. In one example, when the FLUS sink can perform only rendering, the F-C may not be present.

In one embodiment, the F-C may be used to create and control a FLUS session. The F-C may be used for the FLUS source to select a FLUS media instance, such as MTSI, provide static metadata around a media session, or select and configure processing and distribution functions.

The FLUS media instance may be defined as part of the FLUS session. In some cases, the F-U may include a media stream creation procedure, and multiple media streams may be generated for one FLUS session.

The media stream may include a media component for a single content type, such as audio, video, or text, or a media component for multiple different content types, such as audio and video. A FLUS session may be configured with multiple identical content types. For example, a FLUS session may be configured with multiple media streams for video.

In one embodiment, the FLUS source and the FLUS sink may each include a FLUS media module. The FLUS media modules of the FLUS source and the FLUS sink may be connected through the F-U. The FLUS media modules and the F-U may provide functions of creation of one or more media sessions and transmission of media data over a media stream. In some cases, a media session creation protocol (e.g., IMS session setup for an FLUS instance based on MTSI) may be required.

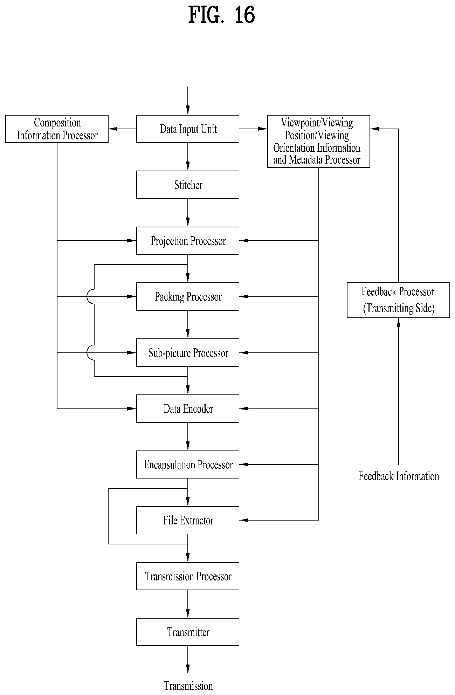

FIG. 16 is a diagram schematically illustrating an example of configuration of a 3DoF+ transmission terminal.

Referring to FIG. 16, when the input data is a camera output image, the transmission terminal (360 video transmission apparatus) may perform stitching for configuring a sphere image according to each viewpoint/viewing position/component. Once a sphere image is configured for each viewpoint/viewing position/component, the image may be projected onto a 2D image for coding. Depending on the application, packing for creating an integrated image from multiple images or sub-picture generation of dividing the image into images of detailed regions may be performed. As described above, the region-wise packing process may be skipped as an optional process. In this case, the packing processor may be omitted. When the input data is supplemental image/audio/text information, a method to add the supplemental information to a central image and display the image may be signaled, and added data may also be transmitted. The generated image and the added data may be compressed into a bitstream in the encoding process, and then transformed into a file format for transmission or storage through the encapsulation process. At this time, a process of extracting a file required by the receiver may be processed according to an application or a system request.

The generated bitstream may be transformed into a transmission format and transmitted through the transmission processor. Then, the transmitting-side feedback processor may process the viewpoint/viewing position/viewing orientation information and necessary metadata based on the information transmitted from the reception terminal, and deliver the same to a related transmitter.

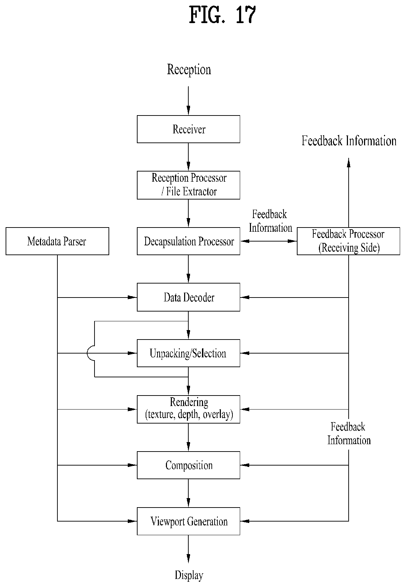

FIG. 17 is a diagram schematically illustrating an example of a configuration of a 3DoF+ reception terminal.

Referring to FIG. 17, the reception terminal (360 video reception apparatus) may extract a necessary file after receiving a bitstream delivered from the transmission terminal. A video stream in the generated file format may be selected using the viewpoint/viewing position/viewing orientation information and the video metadata delivered from the feedback processor, and video information may be reconstructed from the selected bitstream through a decoder. A packed image may be unpacked based on the packing information transmitted through the metadata. When the packing process is omitted at the transmission terminal, unpacking at the reception terminal may also be omitted. When necessary, a process of selecting an image and necessary components suitable for the viewpoint/viewing position/viewing orientation delivered from the feedback processor may be performed. A rendering process of reconstructing the image texture, depth, and overlay information into a format suitable for playback may be performed. Before the final image is generated, a composition process of integrating information of different layers may be performed, and an image suitable for a display viewport may be generated and played.

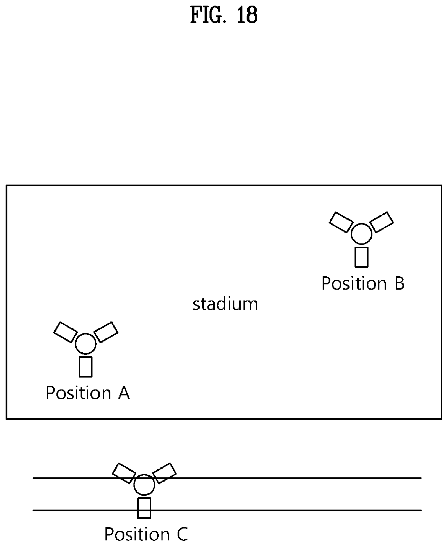

FIG. 18 illustrates an example of capturing information about VR content at multiple positions.

In one embodiment, information for generating VR content may be captured at multiple positions in one scene, as shown in FIG. 18. Two VR cameras may capture, at fixed positions A and B, information for generating VR content, and one VR camera may capture information for generating VR content while continuously changing the position thereof on the rail.

The user may perform viewpoint switching between multiple positions, that is, multiple viewpoints. When a viewpoint is switched to another viewpoint, information about the position of the viewpoint to which the user switches and related media track information may be provided. The system may be designed to switch to another viewpoint based on a hint when a specific viewpoint includes a hint for switching to the other viewpoint.

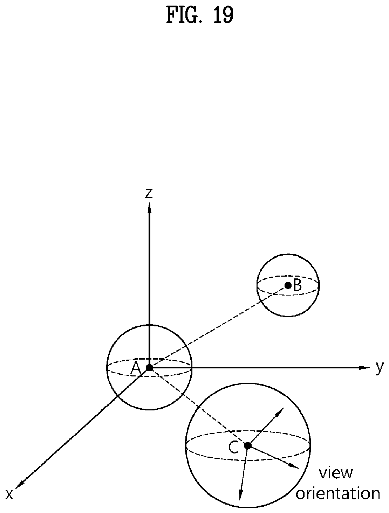

FIG. 19 illustrates an example of three viewpoints presented based on a global coordinate system.

Referring to FIG. 19, the global coordinate system according to an embodiment may be represented as global three-dimensional Cartesian coordinate axes.

In FIG. 19, the center position of viewpoint A may be the origin of the global coordinate system, and may be represented by (0, 0, 0). The absolute value of the position of the viewpoint in the global coordinate system may be expressed in millimeters.

The contents described below focus on the file format syntax element and the format of semantics of the MPEG system. However, video levels and VESA of other formats such as a SEI message, a parameter sets and/or future or current video codecs, system level (e.g., file format, DASH, MMT and 3GPP) or digital interfaces (e.g., HDMI, DisplayPort, etc.) may also operate by reflecting the contents described below.

In one embodiment, ViewpointInfoStruct () may provide viewpoint information including information about the position of a viewpoint and the angles of yaw, pitch, and roll about the X, Y, and Z axes. Here, the yaw, pitch, and roll angles may indicate the rotation angles of the global coordinate system of the viewpoint with respect to the common reference coordinate system. Table 1 below shows an example of ViewpointInfoStruct ().

TABLE 1

```
aligned (8) ViewpointInfoStruct(transition_included_flag) {
    ViewpointPosStruct();
    ViewpointGlobalCoordinateSysRotationStruct();
    if (transition_included_flag) {
        ViewpointTransitionEffectStruct();
    }
}
aligned (8) ViewpointPosStruct() {
    signed int(32) viewpoint_pos_x;
    signed int(32) viewpoint_pos_y;
    signed int(32) viewpoint_pos_z;
}
aligned (8) class ViewpointGlobalCoordinateSysRotationStruct() {
    signed int(32) viewpoint_gcs_yaw;
    signed int(32) viewpoint_gcs_pitch;
    signed int(32) viewpoint_gcs_roll;
}
aligned(8) class ViewpointTransitionEffectStruct() {
    unsigned int(7) transition_effect_type[i];
    unsigned int(1) viewing_orientation_refresh_flag;
    unsigned int(32) viewing_oritentation_yaw;
    unsinged int(32) viewing_orientation_pitch;
    unsinged int(32) viewing_orientation_roll;
}
```

In Table 1, viewpoint_pos_x, viewpoint_pos_y, and viewpoint_pos_z represent the position of the viewpoint in millimeters when (0, 0, 0) is the origin of the common reference coordinate system in 3D space. viewpoint_gcs_yaw, viewpoint_gcs_pitch and viewpoint_gcs_roll may represent the yaw, pitch and roll angles of the X-axis, Y-axis and Z-axis of the global coordinate system of the viewpoint with respect to the common reference coordinate system, respectively, and the unit thereof may be $2^{-16}$ degrees. The viewpoint_gcs_yaw may be in the range of $-180*2^{16}$ to $180*2^{16}$-1, the viewpoint_gcs_pitch may be in the range of $-90*2^{16}$ to $180*2^{16}$-1, and the viewpoint_gcs_roll may be in the range of $-180*2^{16}$ to $180*2^{16}$-1. Next, transition_effect_type may indicate the type of a transition effect when viewpoint switching is performed. Table 2 below shows an example of transition_effect_type.

TABLE 2

| Value | Description |
|---|---|
| 0 | Zoom-in effect to the hot spot point and go to the point |
| 1 | Walk though effect to the hot spot point |
| 2-255 | Reserved for future extension |

In the example according to Table 2, when the value of transition_effect_type is 0, a zoom-in effect representing a transition effect of zooming in to a specific viewpoint may be indicated. When the value of transition_effect_type is 1, a walking-through effect representing a transition effect of walking to a specific viewpoint may be indicated.

Referring back to Table 1, when the value of viewing_orientation_refresh_flag is 1, InitialViewingOrientationSample () may not be provided, and it may be recommended to maintain the viewing orientation of a viewpoint given before switching to the current viewpoint. When the value of viewing_orientation_refresh_flag is 0, InitialViewingOrientationSample () may be provided, and it may be recommended to follow the viewing orientation included in InitialViewingOrientationS ample () signaled in switching to the current viewpoint.

The viewing_orientation_yaw, viewing_orientation_pitch and viewing_orientation_roll indicate the yaw, pitch and roll rotation angles of the X-axis, Y- and Z-axis of the global coordinate system recommended in switching to the current viewpoint, and may be specified in units of $2^{-16}$ degrees. The viewing_orientation_yaw may be in the range of $-180*2^{16}$ to $180*2^{16}$-1 degrees, the viewing_orientation_pitch may be in the range of $-90*2^{16}$ to $180*2^{16}$-1 degrees, and the viewing_orientation_roll may be in the range of $-180*2^{16}$ to $-180*2^{16}$-1 degrees.

A viewpoint information box according to an embodiment may be configured as follows.

TABLE 3

| Box Type: | 'vpnt' |
|---|---|
| Container: | ProjectedOmniVideoBox |
| Mandatory: | No |
| Quantity: | Zero or one |

The information included in Table 3 may provide viewpoint information including position information, and yaw, pitch and roll rotation angles of X-axis, Y-axis and Z-axis of the global coordinate system of a viewpoint with respect to the common reference coordinate system.

According to an embodiment, the viewpoint information box may be expressed, for example, through syntax as shown in Table 4 below.

TABLE 4

```
aligned(8) class ViewpointBox extends FullBox('vpnt', 0, 0) {
   unsigned int(8) num_viewpoints;
   for (i=0; i<num_viewpoints; i++) {
     unsigned int (3) viewpoint_id;
     ViewpointInfoStruct();
   }
}
```

In Table 4, viewpoint_id may indicate IDs of viewpoints included in the viewpoint group, and num_viewpoints may indicate the number of viewpoints signaled in the sample format.

In one embodiment, the dynamic viewpoint timed metadata track may indicate viewpoint parameters that dynamically change with time. In one example, an OMAF player may use the following signaled information in starting playback for the viewpoint after the viewpoint switching is performed. When there is a clearly signaled recommended viewing orientation, the OMAF player may parse the information about the recommended viewing orientation and follow the recommended viewing orientation. On the other hand, when there is no clearly signaled recommended viewing orientation, the OMAF player may maintain the viewing orientation of the viewpoint given before the viewpoint switching even after the viewpoint switching.

In one embodiment, a track sample entry type 'dyvp' may be used. A sample entry of the sample entry type may be specified as shown in Table 5 below.

TABLE 5

```
class DynamicViewpointSampleEntry extends MetaDataSampleEntry('drip')
{
```

In one embodiment, the sample syntax of the sample entry type 'dyvp' may be specified as shown in Table 6 below.

v

```
aligned (3) DynamicViewpointSample() {
   unsigned int(8) num_viewpoints;
   for (i=0; i<num_viewpoints; i++) {
       unsigned int (8) viewpoint_id;
       ViewpointInfoStruct() ;
   }
}
```

In Table 6, viewpoint_id may indicate ID information about the viewpoints included in a viewpoint group, and num_viewpoints may indicate the number of viewpoints signaled in the sample format.

In one embodiment, tracks included in the TrackGroupTypeBox with track_group_type set to 'vpgr' may indicate that switching may be performed within a 360 scene. Tracks mapped to this group, that is, visual tracks having the same value of track_group_id in TrackGroupTypeBox having track_group_type set to 'vpgr', may form viewpoints that may be switched within a 360 scene.

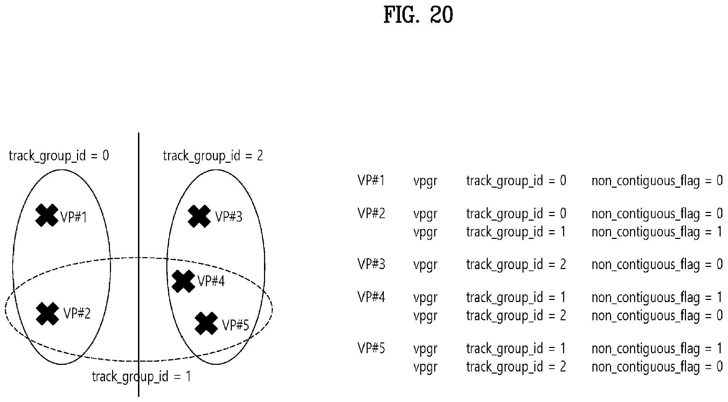

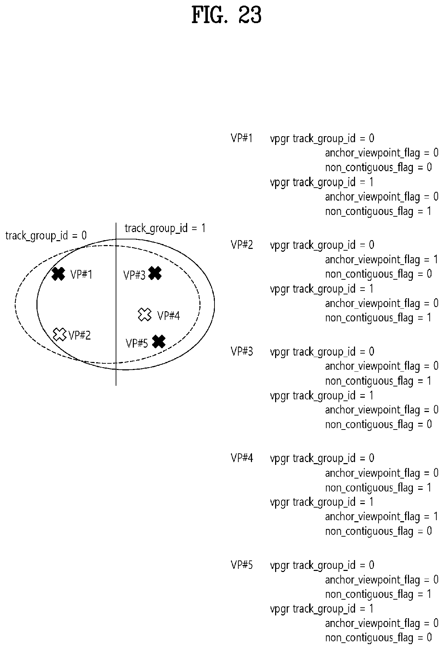

Regarding grouping of multiple viewpoint video tracks, the following two embodiments may be proposed. In a first embodiment, non_contiguous_flag may indicate a contiguity characteristic of a track group. Thus, when track_group_id is the same, the value of non_contiguous_flag may be the same. In a second embodiment, an anchor viewpoint of each contiguous viewpoint may be defined. Meanwhile, embodiments of grouping of multiple viewpoint video tracks are not limited to the first and second embodiments described above. FIGS. 20 to 22B described below may be related to the first embodiment, and FIGS. 23 to 24B may be related to the second embodiment.

According to an embodiment of the present disclosure, a user may experience 360-degree video from various viewpoints by performing viewpoint switching based on multiple viewpoints in a 3DoF, 3DoF + or 6DoF environment. Here, viewpoints to which viewpoint switching may be performed may be referred to as a "hotspot". The hotspot may be interpreted as a sub-concept of viewpoints because it indicates viewpoints to which viewpoint switching may be performed among the viewpoints. However, in some cases, the hotspot may represent the same/similar concept as the viewpoint. Accordingly, any "viewpoint" described throughout this specification may be replaced with a hotspot, and any "hotspot" described throughout this specification may be replaced with a viewpoint. In addition, hotspot related information, such as "hotspot metadata," may also be interpreted as "viewpoint metadata."

The "common reference coordinate system" described in this specification may mean a coordinate system on which a viewpoint group is based (centered). The common reference coordinate system may be referred to as a reference coordinate system.

FIG. 20 shows an example of viewpoint group IDs of multiple viewpoints and non-contiguous flag information.

Syntax for grouping of multiple viewpoint video tracks may be expressed, for example, as shown in Table 7 below.

TABLE 7

```
aligned(8) class ViewpointVideoGroupBox extends TrackGroupTypeBox('vpgr') {
    unsigned int(1) non_contiguous_flag;
    bit(23) reserved = 0;
    unsigned int(8) ViewpointTrackGroupType;
    ViewpointTransitionEffectStruct();
}
```

In Table 7, when the value of non_contiguous_flag is 0, this may indicate that all viewpoints in the group are contiguous in the 360 scene. When the value of non_contiguous_flag is 1, this may indicate that the viewpoint video track group includes at least one non-contiguous viewpoint in the 360 scene. In one example, tracks having the same value of track_group_id may have the same value of non_contiguous_flag.

In one embodiment, when tracks having different values of track_group_id have different values of non_contiguous_flag, track_group_id with a non_contiguous_flag value of 0 may precede track_group_id with a non_contiguous_flag value of 1.

Other types of viewpoint video track groups may be defined by adding a flag or defining ViewpointTrackGroup-Type.

In one example, the semantics of ViewpointTrackGroupType () in Table 7 may include fields such as transition_effect_type, viewing_orientation_refresh_flag, and viewing_orientation_refresh_flag. The transition_effect_type may indicate the types of transition effects when viewpoint switching is performed in a track group. When the value of viewing_orientation_refresh_flag is 1, InitialViewingOrientationSample () may not be present, and it may be recommended to maintain the viewing orientation of the viewpoint given before switching to the current viewpoint. When the value of viewing_orientation_refresh_flag is 0, InitialViewingOrientationSample () may be present, and it may be recommended to follow the viewing orientation included in InitialViewingOrientationSample () signaled in switching to the current viewpoint.

Referring to the example of FIG. 20, viewpoints are represented by VP#1 to VP#5. The line separating VP#1 and VP#2 from VP#3, VP#4 and VP#5 may indicate whether viewpoints are contiguous to each other. VP#1 and VP#2, which are in a group with track_group_id set to 0, are contiguous, and accordingly the value of non_contiguous_flag of the viewpoints in the group with track_group_id set to 0 is 0. In a group with track_group_id set to 1, VP#2 is not contiguous to VP#4 and VP#5, and accordingly the value of non_contiguous_flag of the viewpoints in the group with track_group_id set to 1 is 1. VP#3, VP#4 and VP#5, which are in a group with track_group_id set to 2, are contiguous, and accordingly the value of non_contiguous_flag of the viewpoints in the group with track_group_id set to 2 is 0.

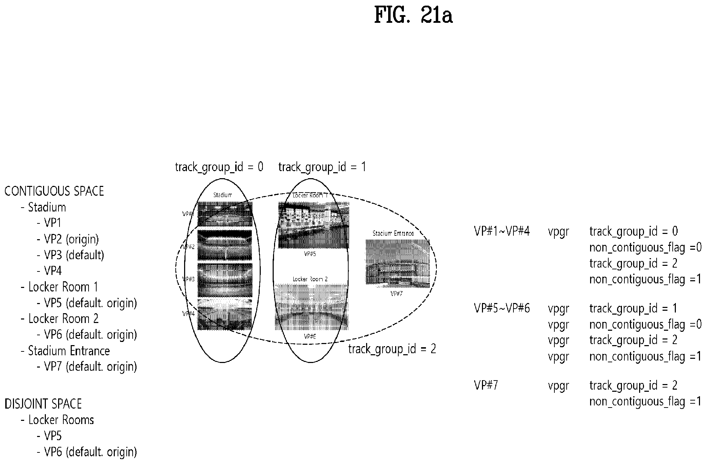

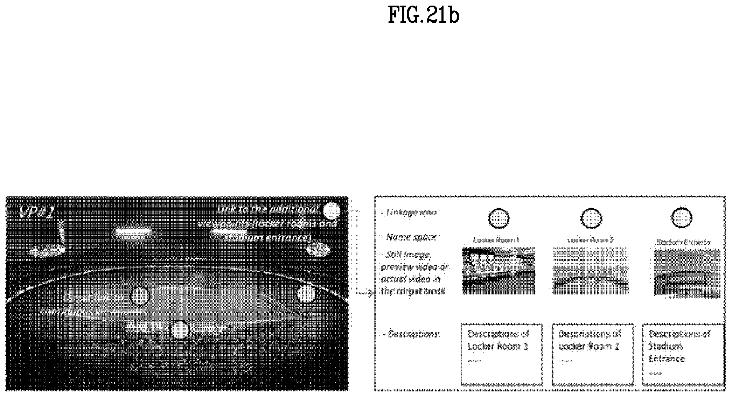

FIGS. 21A and 21B illustrate an example of display according to whether multiple viewpoints are contiguous to each other.

In FIG. 21A, VP#1 to VP#4 represent scenes of a stadium, VP#5 and VP#6 represent scenes of a locker room, and VP#7 represents a scene of a stadium entrance. Since VP#1 to VP#4, which are included in a group with track_group_id set to 0, are contiguous, the value of non_contiguous_flag of the viewpoints in the group with track_group_id set to 0 is 0. Since VP#5 and VP#6, which are included in a group with track_group_id set to 1, are contiguous, the value of non_contiguous_flag of the viewpoints in the group with track_group_id set to 1 is 0. Since not all of VP#1 to VP#7, which are included in the group with track_group_id set to 2, are contiguous to each other, the value of non_contiguous_flag of the viewpoints in the group with track_group_id set to 2 is 1.

In one embodiment, a transition effect applied when switching is performed between contiguous viewpoints may be different from a transition effect applied when switching is performed between non-contiguous viewpoints. In one example, the transition effect applied when switching is performed between contiguous viewpoints may be a zoom-in effect, and the transition effect applied when switching is performed between non-contiguous viewpoints may be a "walking through" or "walk through a hall way" effect.

Referring to FIG. 21B, a name, a still image, a preview video, an actual video, or related description may be delivered or displayed in an overlay manner. Since it can be seen from FIG. 21A that VP#1, VP#2, VP#3, and VP#4 of track_group_id = 0 are contiguous to each other, icons indicating the positions of VP#2, VP#3, and VP#4 may be arranged in the scene of VP#1 in an overlay manner, as shown in FIG. 21B.

VP#5, VP#6 and VP#7, which are not contiguous to VP#1, may be accessed through an overlay icon shown at the top right corner of the left figure of FIG. 21B. In other words, the viewpoints with track_group_id equal to 1 and the viewpoints with track_group_id equal to 2 and not to 0 are not contiguous to VP#1, and accordingly icons corresponding to VP#5, VP#6 and VP#7 are not displayed directly on the scene of VP#1, but may be additionally displayed after access to the link icon. However, embodiments are not limited thereto. The icons corresponding to VP#5, VP#6, and VP#7, which are not contiguous to VP#1, may be presented, for example, through an additional pop-up display, through an add-on on the viewport, through a 360 spherical coordinate system related or unrelated to the actual position, or through a black area according to a coverage limitation of the 360 scene.

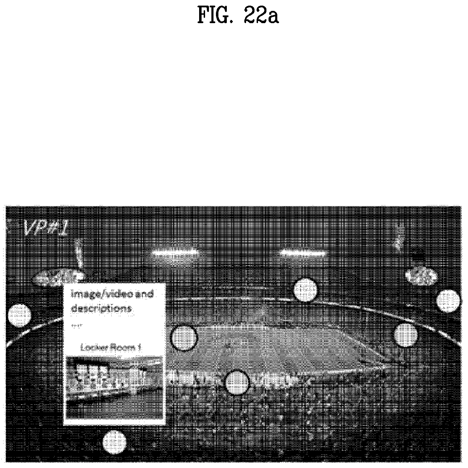

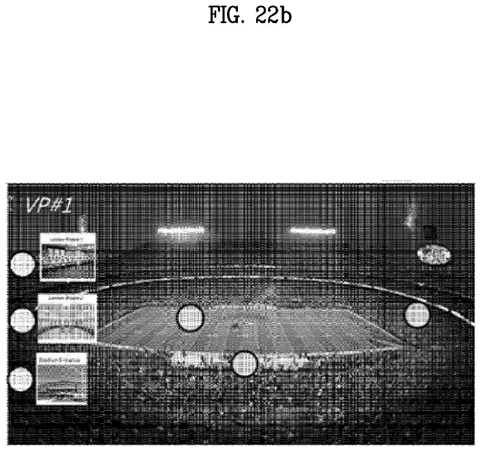

FIGS. 22A and 22B illustrate another example of display according to whether multiple viewpoints are contiguous to each other.

In one embodiment, FIG. 22A may show that the icons corresponding to VP#5, VP#6, and VP#7, which are not contiguous to VP#1, are displayed in a pop-up manner, and FIG. 22B may show that the icons corresponding to VP#5, VP#6, and VP#7, which are not contiguous to VP#1, are displayed in a manner of add-on on the viewport.

Referring to FIG. 22A, VP#5, VP#6 and VP#7 cannot be displayed directly in the scene of VP#1 because they are not contiguous to VP#1. However, icons corresponding to VP#5, VP#6 and VP#7 may be displayed at an optimal indirect position representing VP#5, VP#6 and VP#7 (e.g., the position of the locker room viewed in the scene for VP#1). In addition, image information and description information related to each viewpoint may be displayed in a pop-up manner as shown in FIG. 22A.

Referring to FIG. 22B, icons for VP#5, VP#6, and VP#7 that are not contiguous to VP#1 may be displayed on the left side of the scene for VP#1. In addition, images corresponding to VP#5, VP#6, and VP#7, respectively, may be displayed along with the icons for VP#5, VP#6, and VP#7.

FIG. 23 shows an example of viewpoint group IDs, non-contiguous flag information, and anchor viewpoint flag information of multiple viewpoints.

Syntax for grouping of multiple viewpoint video tracks may be expressed, for example, as shown in Table 8 below.

TABLE 8

```
aligned(S) class ViewpointVideoGroupBox extends TrackGroupTypeEox('vpgr') {
    unsigned int(1) anchor_viewpoint_flag;
    unsigned int(1) non_contiguous_flag;
    bit (23) reserved = 0;
    if(anchor_viewpoint_flag) {
        ViewpointPosStruct() ;
        ViewpointGlobalCoordinateSysRotationStruct();
     }
    unsigned int(8) ViewpointTrackGroupType;
    ViewpointTransitionEffectStruct() ;
  }
```

An anchor viewpoint may be defined as a basic viewpoint of contiguous viewpoints. In Table 8, when the value of anchor_viewpoint_flag is 0, the (current) viewpoint may not be an anchor/master/origin among the contiguous viewpoints in a track group (or viewpoint group). When the value of anchor_viewpoint_flag is 1, the (current) viewpoint may be the anchor/master/origin among the contiguous viewpoints in the track group (or viewpoint group). When multiple contiguous viewpoints in a viewpoint track group (or viewpoint group or track group) are defined, the value of anchor_viewpoint_flag for at least one viewpoint may be 1.

In one embodiment, the anchor viewpoint may be used as a connection point between two separated groups. For example, when multiple viewpoints are defined in one room, a viewpoint positioned at the door of the room may be defined as an anchor viewpoint. Here, the viewpoint positioned at the door of the room may be connected to a viewpoint positioned at the door of another room as a connection point.

In Table 8, when the value of non_contiguous_flag is 0, the current viewpoint may be spatially or logically contiguous to the anchor viewpoint. When the value of non_contiguous_flag is 1, the current viewpoint may be spatially or logically non-contiguous to the anchor viewpoint. That is, the contiguity of a viewpoint in a viewpoint track group may be determined by a spatial relationship or a logical relationship between the current viewpoint and the anchor viewpoint. In one example, another type of viewpoint video track group may be defined by adding a flag or defining ViewpointTrackGroupType.

In one example, ViewpointTrackGroupType may represent indication information about different types of contiguity, such as spatial contiguity and logical contiguity.

In one embodiment, ViewpointTransitionEffectStruct () may include transition_effect_type and viewing_orientation_refresh_flag as described below. The transition_effect_type may indicate the type of a transition effect applied in performing switching between viewpoints in a track group (or viewpoint group). When the value of viewing_orientation_refresh_flag is 0, InitialViewingOrientationSample () may not be present, and it may be recommended to maintain the viewing orientation given before switching is performed in the same track group (or viewpoint group). When the value of viewing_orientation_refresh_flag is 1, the value of InitialViewingOrientationSample () may be specified, and it may be recommended to follow the viewing orientation included in the InitialViewingOrientationSample () signaled when switching is performed in the same track group.

It may be seen from FIG. 23 that the viewpoints with track_group_id equal to 0 (viewpoints surrounded by a dotted line) in a viewpoint track group are VP#1 to VP#5, and the viewpoints with track_group_id equal to 1 in the viewpoint track group (viewpoints surrounded by a solid line) are also VP#1 to VP#5. Contiguity may be determined based on the line in the center of FIG. 23. That is, VP#1 and VP#2 may be contiguous, and VP#3, VP#4, and VP#5 may be contiguous. In FIG. 23, the anchor viewpoint of the viewpoint (track) group with track_group_id equal to 0 is VP#2, and the anchor viewpoint of the viewpoint (track) group with track_group_id equal to 1 is VP#4.

Referring to FIG. 23, in the viewpoint group with track_group_id equal to 0, VP#1 is contiguous to the anchor viewpoint VP#2, and accordingly the value of non_contiguous_flag of VP#1 may be 0. In addition, since VP#1 is not an anchor viewpoint, the value of anchor_viewpoint_flag may be 0. In the viewpoint group with track_group_id equal to 0, VP#3 is not contiguous to the anchor viewpoint VP#2, and accordingly the value of non_contiguous_flag of VP#3 may be 1. In addition, since VP#3 is not an anchor viewpoint, the value of anchor_viewpoint_flag is 0. In the viewpoint group with track_group_id equal to 1, VP#4 is an anchor viewpoint, and accordingly the value of non_contiguous_flag may be 0 and the value of anchor_viewpoint_flag may be 1.

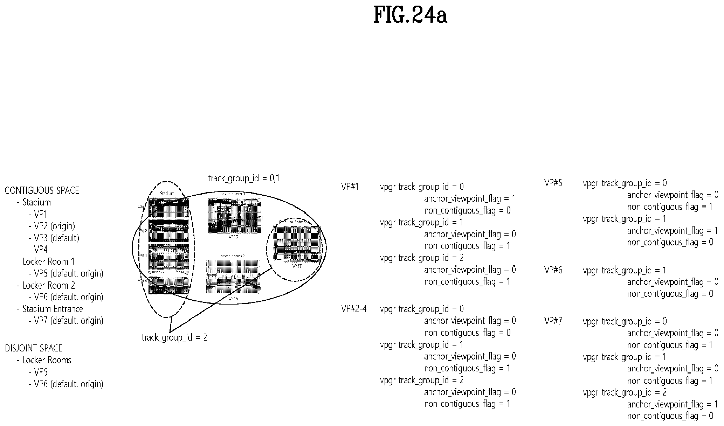

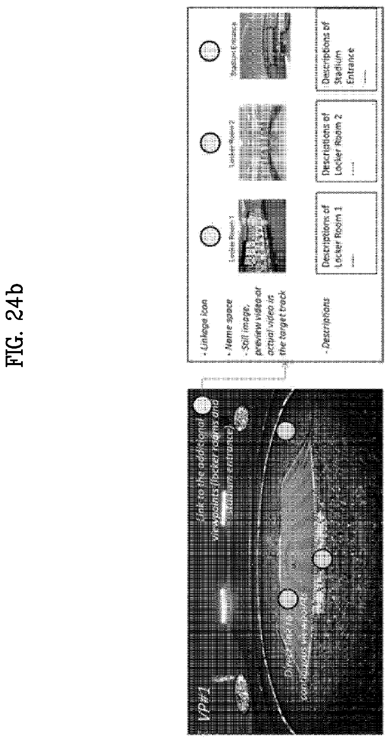

FIGS. 24A and 24B illustrate yet another example of display according to whether multiple viewpoints are contiguous to each other.

Referring to FIG. 24A, in a viewpoint track group, viewpoints with track_group_id equal to 0 are VP#1 to VP#7, wherein VP#1 is an anchor viewpoint, and VP#2 to VP#4 are viewpoints contiguous to the anchor viewpoint VP#1. Accordingly, the value of anchor_viewpoint_flag of VP#1 may be 1, the value of anchor_viewpoint_flag of VP#2 to VP#7 may be 0, the value of non_contiguous_flag of VP#1 to VP#4 may be 0, and the value of anchor_viewpoint_flag of VP#5 to VP#7 may be 1. The anchor viewpoint of the anchor viewpoint (track) group with track_group_id equal to 1 may be VP#5, and the anchor viewpoint of the anchor viewpoint (track) group with track_group_id equal to 2 may be VP#7. Similar to the case of the viewpoint group with track_group_id equal to 0, the values of anchor_viewpoint_flag and non_contiguous_flag for the viewpoint group with track_group_id equal to 1 or the viewpoint group with track_group_id equal to 2 may be determined based on the anchor viewpoints.

In one embodiment, a transition effect applied when switching is performed between contiguous viewpoints may be different from a transition effect applied when switching is performed between non-contiguous viewpoints. In one example, the transition effect applied when switching is performed between contiguous viewpoints may be a zoom-in effect, and a transition effect applied when switching is performed between non-contiguous viewpoints may be a "walking through" or "walk through a hall way" effect.

Referring to FIG. 24B, a name, a still image, a preview video, an actual video, or related description may be delivered or displayed in an overlay manner. Since it can be seen from FIG. 24A that VP#1, VP#2, VP#3, and VP#4 are contiguous to each other in the viewpoint group with track_group_id equal to 0, icons indicating the positions of VP#2, VP#3, and VP#4 may be arranged in the scene of VP#1 in an overlay manner, as shown in FIG. 24B.

VP#5, VP#6 and VP#7, which are not contiguous to VP#1, may be accessed through an overlay icon shown at the top right corner of the left figure of FIG. 24B. In other words, VP#5 to VP#7 are not contiguous to VP#1, and accordingly icons corresponding to VP#5, VP#6 and VP#7 are not displayed directly on the scene of VP#1, but may be additionally displayed after access to the link icon. However, embodiments are not limited thereto. The icons corresponding to VP#5, VP#6, and VP#7, which are not contiguous to VP#1, may be presented, for example, through an additional pop-up display, through an add-on on the viewport, through a 360 spherical coordinate system related or unrelated to the actual position, or through a black area according to a coverage limitation of the 360 scene.

In one embodiment, the metadata described above may be configured like the DASH data in Table 9 below.

TABLE 9

| Elements and attributes for 2DQR descriptor | Use | Data type | Description |
|---|---|---|---|
| transition_eff ect_type | O | omaf:Viewp ointType | indicates the type of transition effects, as listed in Table 1, when switching to this viewpoint.<br><br>| Value | Description |<br>|---|---|<br>| 0 | Zoom-in effect to the hot spot point and go to the point |<br>| 1 | Walk though effect to the hot spot point |<br>| 2-255 | Reserved for future extension | |
| viewing_orient ation_refresh_ flag | O | omaf:Viewp ointType | equal to 0 indicate that InitialViewingOrientationSample() might not present and it is recommended to maintain the viewing orientation of the viewpoint before switching to this viewpoint.<br><br>equal to 1 indicate that InitialViewingOrientationSample() might present and it is recommended to be follow the viewing orientation signalled in InitialViewingOrientationSample() or viewing_oritentation_yaw, viewing_orientation_pitch, viewing_orientation_roll explicitly given in this structure when switching to this viewpoint. |
| viewing_oriten tation_yaw, viewing_orient ation_pitch, viewing_orient ation_roll | O | omaf:Viewp ointType | specify the yaw, pitch, and roll angles, respectively, of the recommended rotation angles of X, Y, Z axes of the global coordinate system of the viewpoint relative when transit to this viewpoint, in units of $2^{-16}$ degrees. viewing_oritentation_yaw shall be in the range of $-180 * 2^{16}$ to $180 * 2^{16} - 1$, inclusive. viewing_orientation_pitch pitch shall be in the range of $-90 * 2^{16}$ to $90 * 2^{16}$, inclusive. viewing_orientation_roll shall be in the range of $-180 * 2^{16}$ to $180 * 2^{16} - 1$, inclusive. |
| num_viewpoints | O | omaf:Viewp ointType | indicate the number of viewpoints signalled in the sample format. |
| viewpoint_id | O | omaf:Viewp ointType | indicates the viewpoint ID of the viewpoint this group of samples belong to. |
| non_contiguous _flag | O | omaf:Viewp ointType | equal to 0 indicates that all the viewpoints in the this group are contiguous 360 scene. non_contiguous_flag equal to 1 indicates that the viewpoint video track group contains one or more non-contiguous 360 scene.<br><br>When there are tracks with the equal value of track_group_id, the value of non_contiguous_flag shall be identical.<br><br>When there are tracks with the non-equal value of track_group_id with non-equal value of non_contiguous_flag in common, the track_group_id with non_contiguous_flag equal to 0 is precedent to the track_group_id with non_contiguous_flag equal to 1. |
| ViewpointTrack GroupType | O | omaf:Viewp ointType | specifies the type of viewpoint track group<br><br>or specifies the type of contiguity of the track, such as spatial contiguity, logical contiguity, etc |

Transition_effect_type in Table 9 may correspond to transition_effect_type[i] in Table 1, and viewing_orientation_refresh_flag in Table 9 may correspond to viewing_orientation_refresh_flag in Table 1. The viewing_orientation_yaw, viewing_orientation_pitch and viewing_orientation_roll in Table 9 may correspond to the viewing_orientation_yaw, viewing_orientation_pitch and viewing_orientation_roll in Table 1, and the num_viewpoints in Table 9 may correspond to the num_viewpoints in Table 4. The viewpoint_id in Table 9 may correspond to the viewpoint_id in Table 4, the non_contiguous_flag in Table 9 may correspond to the non_contiguous_flag in Table 7, and the ViewpointTrackGroupType in Table 9 may correspond to the ViewpointTrackGroupType in Table 7.

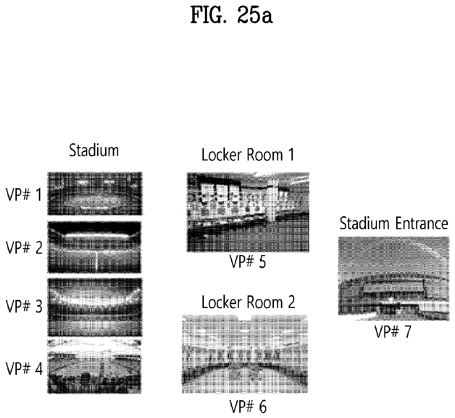

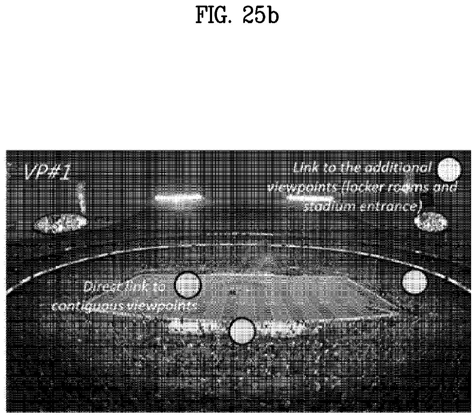

FIGS. 25A and 25B show an example of multiple viewpoints.

Multiple viewpoints may be used when a user searches 360 scenes. A hotspot may be used in the process of performing switching between multiple viewpoints, and the user may perform viewpoint switching by selecting and clicking a hotspot representing switchable viewpoints in a 360 scene.

In order to support multiple viewpoint functions, the following requirements need to be considered. First, a means for describing a spatial relationship between contents corresponding to different viewpoints needs to be defined. Second, contents corresponding to different viewpoints need to be temporarily synchronized. Third, switching content at different viewpoints needs to be supported. Fourth, a smooth transition may be provided when a transition between different viewpoints is performed by a content provider.

Additional metadata needs to be considered to support switching between viewpoints. The first metadata is metadata about the transition effect that is recommended to be used when switching from one viewpoint to another is performed. The transition effect may include, for example, a walk-through effect or a zoom-in effect. The metadata about the transition effect may provide a smooth transition when switching between viewpoints intended by the content provider is performed.

The second metadata is metadata about grouping of viewpoints that allows the user to select one of the available viewpoints. FIG. 25A is an example of multiple viewpoints of a sports stadium, showing multiple viewpoints of the sports stadium, and viewpoints outside the field, such as multiple viewpoints of a locker room and a viewpoint of the entrance of the stadium. In a case related to multiple viewpoints of the sports stadium, a viewpoint to which the user may switch the hotspot may be positioned in the current 360 scene, and the position of the viewpoint may be determined based on the actual relationship between contiguous viewpoints. When the viewpoint position is aligned with the scene, the user may intuitively select the viewpoint.

On the other hand, in a case related to viewpoints outside the field, the spatial relationship between viewpoints may not be aligned with the scene, and accordingly the receiver needs to indicate the availability of non-contiguous viewpoints using another method. Referring to FIG. 25B, it may be seen that the locker rooms and the entrance to the stadium are connected to a hot spot that does not match the actual viewpoint.

In one embodiment, in order to address the above-mentioned issue, a signaling method that enables a receiver to receive information about an intended transition effect may be provided. Additionally, new track grouping for multiple viewpoints indicating a group of video tracks for viewpoint switching may be proposed. In order to support switching of multiple viewpoints, a method of delivering viewpoint metadata in an OMAF may be proposed. In the method of delivering viewpoint metadata in the OMAF, transition effect metadata may be included in ViewpointInfoStruct () so as to be delivered, new track grouping for viewpoints may be proposed to indicate a group of video tracks switched within a contiguous or non-close 360 scene.

In one embodiment, ViewpointInfoStruct () may provide viewpoint information including the position of a viewpoint in the global coordinate system and the yaw, pitch, and roll rotation angles of the X, Y, and Z axes with respect to the common reference coordinate system. In one example, a common reference coordinate system that is applied to all viewpoints in the viewpoint group in common needs to be defined. An example of a syntax including ViewpointInfoStruct () is shown in Table 10 below.

TABLE 10

```
aligned(8) class ViewpointInfoStruct(transition_included_flag) {
   ViewpointPosStruct();
   ViewpointGlobalCoordinateSysRotationStruct () ;
   if (transition_included_flag) {
     ViewpointTransitionEffectStruct () ;
   }
}
aligned(8) class ViewpointPosStruct() {
   signed int(32) viewpoint_pos_x;
   signed int(32) viewpoint_pos_y;
   signed int(32) viewpoint_pos_z;
}
aligned(8) class ViewpointGlobalCoordinateSysRotationStruct() {
   signed int(32) viewpoint_gcs_yaw;
   signed int(32) viewpoint_gcs_pitch;
   signed int(32) viewpoint_gcs_roll;
}
aligned(8) class ViewpointTransitionEffectStruct() {
       unsigned int(7) transition_effect_type[i];
       unsigned int(1) viewing_orientation_refresh_flag;
```

The viewpoint_pos_x, viewpoint_pos_y, and viewpoint_pos_z may indicate the position of a viewpoint in millimeters in a 3D space when (0, 0, 0) is the origin of the common reference coordinate system.

The viewpoint_gcs_yaw, viewpoint_gcs_pitch, and viewpoint_gcs_roll may represent the yaw, pitch and roll angles of the X-axis, Y-axis and Z-axis of the global coordinate system of a viewpoint with respect to the common reference coordinate system, respectively, and the unit of the angles may be $2^{-16}$ degrees. The viewpoint_gcs_yaw may be in the range of $-180*2^{16}$ to $180*2^{16}-1$, the viewpoint_gcs_pitch may be in the range of $-90*2^{16}$ to $180*2^{16}-1$, and the viewpoint_gcs_roll may be in the range of $-180*2^{16}$ to $180*2^{16}-1$. Next, the transition_effect_type may indicate the type of a transition effect when viewpoint switching is performed. Table 11 below shows an example of transition_effect_type.

TABLE 11

| Value | Description |
|-------|-------------|
| 0 | Zoom-in effect to the hot spot point and go to the point |
| 1 | Walk though effect to the hot spot point |
| 2-127 | Reserved for future extension |

Referring back to Table 10, when the value of viewing_orientation_refresh_flag is 1, InitialViewingOrientation-Sample () may not be provided, and it may be recommended to maintain the viewing orientation of a viewpoint given before switching to the current viewpoint. When the value of viewing_orientation_refresh_flag is 0, InitialViewingOrientationSample () may be provided, and it may be recommended to follow the viewing orientation included in InitialViewingOrientationSample () signaled in switching to the current viewpoint. In another example, when the value of viewing_orientation_refresh_flag is 0 and InitialViewingOrientationSample () is not present, (0, 0, 0) of the coordinate system of the viewpoint may be determined as a viewing orientation in viewpoint switching.

The ViewpointInfoStruct according to Table 10 is merely an example, and it will be easily understood by those skilled in the art that the syntax representing ViewpointInfoStruct is not limited to Table 10.

In one embodiment, TrackGroupTypeBox with track_group_type set to 'vpgr' may indicate that the corresponding track is a switchable track in a 360 scene. The track mapped to the corresponding group may form switchable viewpoints in the 360 scene.

In one embodiment, Table 12 below may show an example of a syntax including anchor_viewpoint_flag and non_contiguous_flag.

TABLE 12

```
aligned(8) class ViewpointVideoGroupBox extends
        TrackGroupTypeBox('vpgr') {
            unsigned int(1) anchor_viewpoint_flag;
            if (anchor_viewpoint_flag == 0){
               unsigned int(1) non_contiguous_flag;
               bit(6) reserved = 0;
            } else
        } bit(7) reserved = 0;
```

In Table 12, when the value of anchor_viewpoint_flag is 1, the (current) viewpoint may correspond to an anchor viewpoint that forms the basis for determining contiguity of viewpoints in the same viewpoint track group. When there are multiple tracks having the same value of track_group_id, the value of anchor_viewpoint_flag of at least one track (or viewpoint) of the corresponding group may be 1.

In one example, the OMAF player may play an anchor viewpoint track when the user joins the corresponding viewpoint track group rather than explicitly selecting a specific viewpoint in the viewpoint track group, as in the case of a 360 scene change.

When the value of non_CONTIGUOUS_FLAG in Table 12 is 0, the viewpoint may be contiguous to the anchor viewpoint. When the value of non_contiguous_flag is 1, the viewpoint may be non-contiguous to the anchor viewpoint.

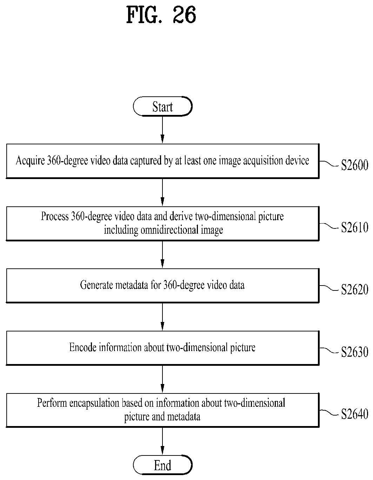

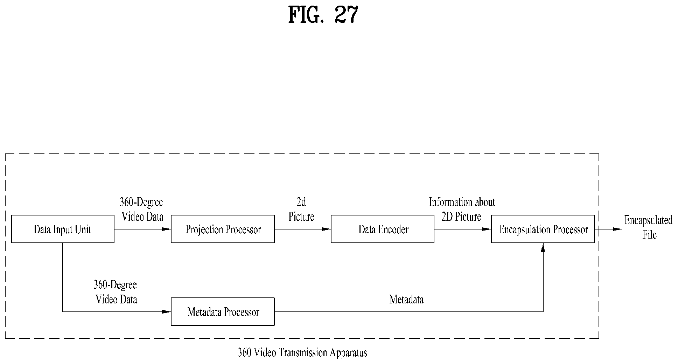

FIG. 26 is a flowchart illustrating a method of operating a 360-degree video transmission apparatus according to an embodiment, and FIG. 27 is a block diagram illustrating a configuration of a 360-degree video transmission apparatus according to an embodiment.

Each step disclosed in FIG. 26 may be performed by the 360 video transmission apparatus disclosed in FIG. 5, the 360 video transmission apparatus disclosed in FIG. 14A, the FLUS source disclosed in FIG. 15, or the 360-degree video transmission apparatus disclosed in FIG. 27. In one example, S2600 of FIG. 26 may be performed by the data input unit of the 360 video transmission apparatus disclosed in FIG. 5, and S2610 of FIG. 26 may be performed by the projection processor of the 360 video transmission apparatus disclosed in FIG. 5. S2620 of FIG. 26 may be performed by the metadata processor disclosed in FIG. 5, S2630 of FIG. 26 may be performed by the data encoder of the 360 video transmission apparatus disclosed in FIG. 5, and S2640 of FIG. 26 may be performed by the encapsulation processor of the 360 video transmission apparatus disclosed in FIG. 5. Accordingly, in describing each step of FIG. 26, description of details already described with reference to FIGS. 5, 14A, and 15 will be skipped or briefly made.

As illustrated in FIG. 27, a 360-degree video transmission apparatus according to an embodiment may include a data input unit, a projection processor, a metadata processor, a data encoder, and an encapsulation processor. However, in some cases, not all of the components shown in FIG. 27 may be essential components of the 360-degree video transmission apparatus. The 360-degree video transmission apparatus may be implemented by more or fewer components than those shown in FIG. 27.

In the 360-degree video transmission apparatus according to the embodiment, the data input unit, the projection processor, the metadata processor, the data encoder, and the encapsulation processor may each be implemented as separate chips, or two or more components may be implemented through one chip.

In this specification, "360 video" and "360-degree video" merely differ in name and may represent the same object. Accordingly, the "360 video transmission apparatus" shown in FIG. 5 and the "360-degree video transmission apparatus" shown in FIG. 27 merely differ in name from each other and may perform the same/similar operations. The "360-degree video reception apparatus" shown in FIG. 6 and the "360-degree video reception apparatus" shown in FIG. 23 merely differ in name from each other and may perform the same/similar operations.

According to an embodiment, the 360-degree video transmission apparatus may acquire 360-degree video data captured by at least one image acquisition device (S2600). More specifically, the data input unit of the 360-degree video transmission apparatus may acquire 360-degree video data captured by at least one image acquisition device.

In one example, the image acquisition device may include a camera, a camcorder, a smartphone, and a PC, but is not limited thereto.

According to an embodiment, the 360-degree video transmission apparatus may process the 360-degree video data to derive a two-dimensional picture including an omnidirectional image (S2610). More specifically, the projection processor of the 360-degree video transmission apparatus may process the 360-degree video data to derive a two-dimensional picture including an omnidirectional image.

According to an embodiment, the 360-degree video transmission apparatus may generate metadata for the 360-degree video data (S2620). More specifically, the metadata processor of the 360-degree video transmission apparatus may generate metadata for the 360-degree video data.

In one embodiment, the metadata may contain non-contiguous flag information indicating whether at least one viewpoint included in a viewpoint group in the 360-degree video data is non-contiguous to each other. In one example, the non-contiguous flag information may be referred to as non_contiguous_flag.

In one embodiment, when all the viewpoints included in the viewpoint group are contiguous to each other, the value of the non-contiguous flag information may be 0. When the at least one viewpoint included in the viewpoint group is not contiguous to each other, the value of the non-contiguous flag information may be 1.

In one embodiment, whether the at least one viewpoint included in the viewpoint group is non-contiguous to each other may be determined based on at least one of spatial non-contiguity and logical non-contiguity. In one example, whether the at least one viewpoint included in the viewpoint group is non-contiguous to each other may be determined based on ViewpointTrackGroupType.

In one embodiment, the metadata may further contain anchor viewpoint flag information indicating whether the current viewpoint included in the viewpoint group is an anchor viewpoint. In one example, the anchor viewpoint flag information may be referred to as anchor_viewpoint_flag.

In one embodiment, when the current viewpoint is the anchor viewpoint, the value of the anchor viewpoint flag information about the current viewpoint may be 1. When the current viewpoint is not the anchor viewpoint, the value of the anchor viewpoint flag information about the current viewpoint may be 0.

In one embodiment, when the current viewpoint included in the viewpoint group is contiguous to the anchor viewpoint, the value of the non-contiguous flag information about the current viewpoint may be 0. When the current viewpoint included in the viewpoint group is non-contiguous to the anchor viewpoint, the value of the non-contiguous flag information about the current viewpoint may be 1.

In one embodiment, when the value of the anchor viewpoint flag information is 1, the value of the non-contiguous flag information may be 0.

In one embodiment, the metadata may further contain information about whether to apply an initial viewing orientation to a viewpoint. In one example, the information about whether to apply the initial viewing orientation to the viewpoint may be referred to as viewing_orientation_refresh_flag.

In one embodiment, when it is determined to apply the initial viewing orientation to the viewpoint based on the information on whether to apply the initial viewing orientation, the metadata may contain information about a yaw angle, a pitch angle, and a roll angle of the initial viewing orientation with respect to the viewpoint. In one example, the information about the yaw angle, pitch angle, and roll angle of the initial viewing orientation with respect to the viewpoint may be referred to as InitialViewingOrientationS ample.

In one embodiment, the metadata may further contain information about a type of transition effect to be applied when viewpoint switching is performed in the viewpoint group. In one example, the information about the type of the transition effect may be referred to as transition_effect_type.

In one embodiment, the information about the type of the transition effect may include information about a zoom-in effect and information about a walking through effect.

The 360-degree video transmission apparatus according to an embodiment may encode information about a 2D picture (S2630). More specifically, the data encoder of the 360-degree video transmission apparatus may encode the information about the 2D picture.

According to an embodiment, the 360-degree video transmission apparatus may perform encapsulation based on the information about the 2D picture and the metadata (S2640). More specifically, the encapsulation processor of the 360-degree video transmission apparatus may perform encapsulation based on the information about the 2D picture and the metadata.

According to the 360-degree video transmission apparatus and the operation method of the 360-degree video transmission apparatus disclosed in FIGS. 26 and 27, the 360-degree video transmission apparatus according to an embodiment may acquire 360-degree video data captured by at least one camera (S2600), process the 360-degree video data and derive a 2D picture including an omnidirectional image (S2610), generate metadata for the 360-degree video data (S2620), encode information about the 2D picture (S2630), and perform encapsulation based on the information about the 2D picture and the metadata (S2640). Here, the metadata may contain non-contiguous flag information indicating whether at least one viewpoint included in a viewpoint group in the 360-degree video data is non-contiguous to each other. Accordingly, the non-contiguous flag information indicating whether the at least one viewpoint included in the viewpoint group in the 360-degree video is non-contiguous to each other may be effectively signaled.

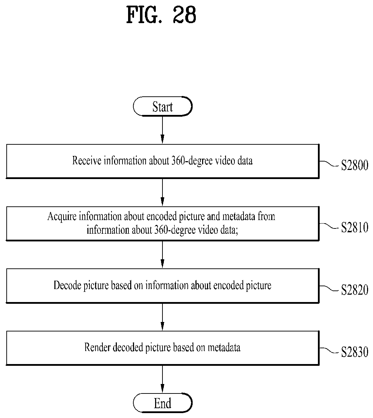

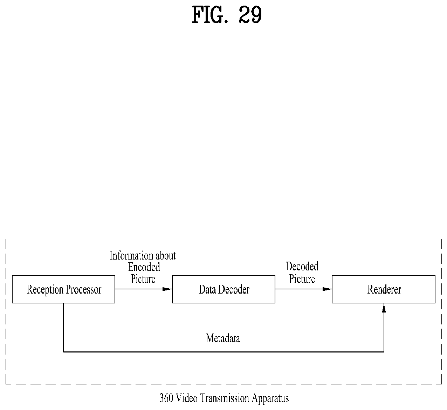

FIG. 28 is a flowchart illustrating a method of operating a 360-degree video reception apparatus according to an embodiment, and FIG. 29 is a block diagram illustrating a configuration of a 360-degree video reception apparatus according to an embodiment.

The 360-degree video reception apparatus and operation method thereof according to FIGS. 28 and 29 may partially correspond to the above-described operation method of the 360-degree video transmission apparatus according to FIGS. 26 and 27. Accordingly, description of the operations as those of the above-described operation method may be briefly made or skipped.

Each step disclosed in FIG. 28 may be performed by the 360 video reception apparatus disclosed in FIG. 6, the 360 video reception apparatus disclosed in FIG. 14B, the FLUS sink disclosed in FIG. 15, or the 360 video reception apparatus disclosed in FIG. 29. In one example, S2800 and S2810 of FIG. 28 may be performed by the reception processor of the 360 video reception apparatus disclosed in FIG. 6. S2820 of FIG. 28 may be performed by the data decoder of the 360 video reception apparatus disclosed in FIG. 6, and S2830 of FIG. 28 may be performed by the renderer disclosed in FIG. 6. Accordingly, in describing each step of FIG. 28, description of details already described with reference to FIGS. 6, 14B, and 15 will be omitted or briefly made.

As illustrated in FIG. 29, a 360-degree video reception apparatus according to an embodiment may include a reception processor, a data decoder, and a renderer. However, in some cases, not all of the components shown in FIG. 29 may be essential components of the 360-degree video reception apparatus. The 360-degree video reception apparatus may be implemented by more or fewer components than those shown in FIG. 29.

In the 360-degree video reception apparatus according to the embodiment, the reception processor, the data decoder, and the renderer may be implemented as separate chips, or at least two or more of the components may be implemented through one chip.

The 360-degree video reception apparatus according to the embodiment may receive information about 360-degree video data (S2800). More specifically, the reception processor of the 360-degree video reception apparatus may receive the information about 360-degree video data.

In one embodiment, the 360-degree video reception apparatus may receive the information about the 360-degree video data from a 360-degree video transmission apparatus. The information about the 360-degree video data may include, for example, a file derived by performing encapsulation based on information about a picture encoded by the 360-degree transmission apparatus and metadata for the 360-degree video data. However, examples are not limited thereto.

The 360-degree video reception apparatus according to the embodiment may acquire the information about the encoded picture and the metadata from the information about the 360-degree video data (S2810). More specifically, the reception processor, the metadata parser, or the decapsulation processor of the 360-degree video reception apparatus may acquire the information about the encoded picture and the metadata from the information about the 360-degree video data.

The 360-degree video reception apparatus according to the embodiment may decode the picture based on the information about the encoded picture (S2820). More specifically, the data decoder of the 360-degree video reception apparatus may decode the picture based on the information about the encoded picture.

The 360-degree video reception apparatus according to the embodiment may render the decoded picture based on the metadata (S2830). More specifically, the renderer of the 360-degree video reception apparatus may render the decoded picture based on the metadata.

According to the 360-degree video reception apparatus and the operation method of the 360-degree video reception apparatus disclosed in FIGS. 28 and 29, the 360-degree video reception apparatus according to the embodiment may receive information about 360-degree video data (S2800), acquire information about an encoded picture and metadata from the information about the 360-degree video data (S2810), decode the picture based on the information about the encoded picture (S2820), and render the decode picture based on the metadata (S2830). Here, the metadata may contain non-contiguous flag information indicating whether at least one viewpoint included in a viewpoint group in the 360-degree video data is non-contiguous to each other. Accordingly, the non-contiguous flag information indicating whether the at least one viewpoint included in the viewpoint group in the 360-degree video is non-contiguous to each other may be effectively signaled.

Each of the above-described parts, modules, or units may be a processor or hardware part that executes successive procedures stored in a memory (or storage unit). Each of the steps described in the above-described embodiment may be performed by processors or hardware parts. Each module/block/unit described in the above-described embodiment may operate as a hardware element/processor. In addition, the methods described in the present disclosure may be executed as code. The code may be written in a recoding medium readable by a processor, and thus may be read by the processor provided by the apparatus.

While the methods in the above-described embodiment are described based on a flowchart of a series of steps or blocks, the present disclosure is not limited to the order of the steps. Some steps may take place in a different order or simultaneously. It will be understood by those skilled in the art that the steps shown in the flowchart are not exclusive, and other steps may be included or one or more of the steps in the flowchart may be deleted within the scope of the present disclosure.

When embodiments of the present disclosure are implemented in software, the above-described method may be implemented as a module (process, function, etc.) configured to perform the above-described functions. The module may be stored in a memory and may be executed by a processor. The memory may be inside or outside the processor, and may be connected to the processor by various well-known means. The processor may include application-specific integrated circuits (ASICs), other chipsets, logic circuits, and/or data processing devices. The memory may include a read-only memory (ROM), a random access memory (RAM), a flash memory, a memory card, a storage medium, and/or other storage devices.

## Claims

1. A method of processing 360-degree video data by a 360-degree video transmission apparatus, the method comprising:

   acquiring 360-degree video data captured by at least one image acquisition device;
   processing the 360-degree video data and deriving a two-dimensional picture including an omnidirectional image;
   generating metadata for the 360-degree video data;
   encoding information about the two-dimensional picture; and
   performing encapsulation based on the information about the two-dimensional picture and the metadata,
   wherein the metadata contains non-contiguous flag information indicating whether at least one viewpoint included in a viewpoint group in the 360-degree video data is non-contiguous to each other.

2. The method of claim 1, wherein, when all viewpoints included in the viewpoint group are contiguous to each other, the non-contiguous flag information has a value of is 0, and
   wherein, when the at least one viewpoint included in the viewpoint group is non-contiguous to each other, the non-contiguous flag information has a value of 1.

3. The method of claim 2, wherein whether the at least one viewpoint included in the viewpoint group is non-contiguous to each other is determined based on at least one of spatial non-contiguity and logical non-contiguity.

4. The method of claim 1, wherein the metadata further contains anchor viewpoint flag information indicating whether a current viewpoint included in the viewpoint group is an anchor viewpoint.

5. The method of claim 4, wherein, when the current viewpoint is the anchor viewpoint, the anchor viewpoint flag information about the current viewpoint has a value of 1, and
wherein, when the current viewpoint is not the anchor viewpoint, the anchor viewpoint flag information about the current viewpoint has a value of 0.

6. The method of claim 5, wherein, when the current viewpoint included in the viewpoint group is contiguous to the anchor viewpoint, the non-contiguous flag information about the current viewpoint has a value of 0, and
wherein, when the current viewpoint included in the viewpoint group is non-contiguous to the anchor viewpoint, the non-contiguous flag information about the current viewpoint has a value of 1.

7. The method of claim 6, wherein, when the anchor viewpoint flag information has the value of 1, the non-contiguous flag information has the value of 0.

8. The method of claim 1, wherein the metadata further contains information about whether to apply an initial viewing orientation to the viewpoint.

9. The method of claim 8, wherein, when it is determined to apply the initial viewing orientation to the viewpoint based on the information about whether to apply the initial viewing orientation, the metadata contains information about a yaw angle, a pitch angle, and a roll angle of the initial viewing orientation with respect to the viewpoint.

10. The method of claim 1, wherein the metadata further contains information about a type of a transition effect to be applied when viewpoint switching is performed in the viewpoint group.

11. The method of claim 10, wherein the information about the type of the transition effect comprises information about a zoom-in effect and information about a walking through effect.

12. A method of processing 360-degree video data by a 360-degree video reception apparatus, the method comprising:

    receiving information about 360-degree video data;
    acquiring information about an encoded picture and metadata from the information about the 360-degree video data;
    decoding the picture based on the information about the encoded picture; and
    rendering the decoded picture based on the metadata,
    wherein the metadata contains non-contiguous flag information indicating whether at least one viewpoint included in a viewpoint group in the 360-degree video data is non-contiguous to each other.

13. The method of claim 12, wherein, when all viewpoints included in the viewpoint group are contiguous to each other, the non-contiguous flag information has a value of is 0, and
wherein, when the at least one viewpoint included in the viewpoint group is non-contiguous to each other, the non-contiguous flag information has a value of 1.

14. The method of claim 12, wherein the metadata further contains anchor viewpoint flag information indicating whether a current viewpoint included in the viewpoint group is an anchor viewpoint,
wherein, when the current viewpoint is the anchor viewpoint, the anchor viewpoint flag information about the current viewpoint has a value of 1,
wherein, when the current viewpoint is not the anchor viewpoint, the anchor viewpoint flag information about the current viewpoint has a value of 0,
wherein, when the current viewpoint included in the viewpoint group is contiguous to the anchor viewpoint, the non-contiguous flag information about the current viewpoint has a value of 0, and
wherein, when the current viewpoint included in the viewpoint group is non-contiguous to the anchor viewpoint, the non-contiguous flag information about the current viewpoint has a value of 1.

15. A 360-degree video transmission apparatus for processing 360-degree video data, comprising:

    a data input unit configured to acquire 360-degree video data captured by at least one image acquisition device;
    a projection processor configured to process the 360-degree video data and deriving a two-dimensional picture including an omnidirectional image;
    a metadata processor configured to generate metadata for the 360-degree video data;
    a data encoder configured to encode information about the two-dimensional picture; and

an encapsulation processor configured to perform encapsulation based on the information about the two-dimensional picture and the metadata,

wherein the metadata contains non-contiguous flag information indicating whether at least one viewpoint included in a viewpoint group in the 360-degree video data is non-contiguous to each other.

## FIG. 1

| Capture | Preparation | Delivery | Processing | Rendering |
|---|---|---|---|---|
| Raw data (video, 3D point cloud, 3D model) | Stitching editing, image processing, encoding | Broadcast or unicast transmission | image processing, decoding, upscaling, re-projection | Video display & head-tracking interaction |

Feedback

Head orientation for region of interest

## FIG. 2

```
aligned(8) class Box (unsigned int(32) boxtype, optional
unsigned int(8)[16] extended_type)
{
    unsigned int(32) size;
    unsigned int(32) type = boxtype;
    if (size==1) {
        unsigned int(64) largesize;
    } else if (size==0) {
        //   box extends to end of file
    }
    if (boxtype=='uuid') {
        unsigned int(8)[16] usertype = extended_type;
    }
}

aligned(8) class FullBox(unsigned int(32) boxtype, unsigned int(8)
v, bit(24) f) extends Box(boxtype) {
    unsigned int(8)       version = v;
    bit(24)               flags = f;
}
```

# FIG. 3

## FIG. 4

HTTP Server

2200 —

Media Presentation
Description (MPD)

Segment
⋮
Segment

DASH Client

DASH Client Controller

MPD
Parser

Media
Engine

Segment
Parser

HTTP Client

HTTP

400

---

2210

**Media Presentation**

Period, start=0s

Period, start=100s

Period, start=195s

⋮

**Period**
Start=100s
baseURL=http://dash.com/

Adaptation Set 1
Audio

Adaptation Set 2
Video

Adaptation Set 3
Captions

⋮

**Representation 1**
bnadwidth=850kbps
width=1280, height=720, ...

Segment Information
Duration=10s
Template: /video-1-$Number$

**Representation 2**
bnadwidth=1250kbps
baseURL=http://dash.com/

⋮

Representation M

**Segment Information**

Initialization Segment

http://dash.com/video-1

Media Segment 1
start=100s
http://dash.com/video-1-1

Media Segment 2
start=110s
http://dash.com/video-1-2

⋮

Media Segment 10
start=190s
http://dash.com/video-1-10

410

# FIG. 5

**360 Video Transmission Apparatus**

Data Input Unit → Metadata Processor

Data Input Unit → Stitcher → Projection Processor → Data Encoder → Encapsulation Processor → Transmission Processor → Transmitter

(Transmitting-side) Feedback Processor

Transmission

Feedback Information

# FIG. 6

Reception                    Feedback Information

360 Video
Transmission Apparatus

Receiver

Reception Processor

Metadata Parser     Decapsulation Processor     Feedback Information     (Receiving-side) Feedback Processor

Feedback Information

Data Decoder

Feedback Information

Re-Projection Processor

Feedback Information

Renderer

# FIG. 7

Pitch Axis

Roll Axis

Yaw Axis

EP 3 806 458 A1

# FIG. 8

Image stitching, projection, and region-wise packing

Input images —$B_i$→ | Stitching and projection | —C Projected frame→ | Region-wise packing (optional) | —D Packed frame(s)→ | Image/video encoding |

(a)

| top |
|-----|
| middle |
| bottom |

Equirectangular panorama picture

—Region-wise resampling and positioning→

| top | bottom |
|-----|--------|
| middle | |

(b)

| | top | | |
|------|------|------|------|
| right | front | left | back |
| | bottom | | |

→

| Front | Right |
|-------|-------|
| | Back |
| Left | Top | Bottom |

(c)

| Projections | 3D Model | 2D Projection | Vertexes |
|-------------|----------|---------------|----------|
| Tetrahedron (4 faces) | | | 4 |
| Cube (6 faces) | | | 8 |
| Octahedron (8 faces) | | | 6 |
| Dodecahedron (12 faces) | | | 20 |
| Icosahedron (20 faces) | | | 12 |

(d)

FIG. 9a

(a)

(r, 0, 0)

(r, π/2, 0)

(0, 0)

(2πK$_x$r,0)

(3πK$_x$r/2, πK$_x$r/2)

(πK$_x$r,πK$_x$r/2)

(0, πK$_x$r)

(2πK$_x$r,πK$_x$r)

(b)

| | top | | |
|------|------|------|------|
| right | front | left | back |
| | bottom | | |

| bottom | top | back |
|--------|------|------|
| right | front | left |

(c)

| side | top |
|------|------|
| | bottom |

| top | bottom |
|-----|--------|
| side | |

(d)

2πr

πr

# FIG. 9b

(e)

(f)

width (e.g., 2πr)

(g)

FIG. 10a

Q1              Q2

Region of Interest

1000

Transmitted tiles

Encoded video

Q3              Q4

**FIG. 10b**

# FIG. 11

```
...
            < Default metadata >
unsigned      int(8)      vr_geometry;
unsigned      int(8)      projection_schme;
     < Stereoscopic related metadata >
unsigned      int(1)      is_stereoscopic;
unsigned      int(3)      stereo_mode;
     < Initial View related metadata >
signed        int(8)      initial_view_yaw_degree;
signed        int(8)      initial_view_pitch_degree;
signed        int(8)      initial_view_roll_degree;
        < ROI related metadata >
unsigned int(1)           2d_roi_range_flag;
unsigned int(1)           3d_roi_range_flag;
if (2d_roi_region_flag==1) {
  unsigned int(16) min_top_left_x;
  unsigned int(16) max_top_left_x;
  unsigned int(16) min_top_left_y;
  unsigned int(16) max_top_left_y;
  unsigned int(16) min_width;
  unsigned int(16) max_width;
  unsigned int(16) min_height;
  unsigned int(16) max_height;
  unsigned int(16) min_x;
  unsigned int(16) max_x;
  unsigned int(16) min_y;
  unsigned int(16) max_y;
}
if (3d_roi_region_flag==1{
  unsigned int(16) min_yaw;
  unsigned int(16) max_yaw;
  unsigned int(16) min_pitch;
  unsigned int(16) max_pitch;
  unsigned int(16) min_roll;
  unsigned int(16) max_roll;
  unsigned int(16) min_field_of_view;
  unsigned int(16) max_field_of_view;
}
     < Field Of View related metadata >
unsigned int(1)           content_fov_flag;
if (content_fov_flag==1) {
  unsigned int(16)        content_fov;
}
     < Cropped Region related metadata >
unsigned int(1)           is_copped_region;
if (content_fov_flag==1) {
  unsigned int(16)        cr_region_left_top_x;
  unsigned int(16)        cr_region_left_top_y;
  unsigned int(16)        cr_region_width;
  unsigned int(16)        cr_region_height;
}
...
```

FIG. 12

viewpoint

(a)

viewing position

(b)

viewing orientation

(c)

# FIG. 13

1310     1320          1330     1340

Acquisition
video/image/
audio/text data

Pre-procession&
encoding
Stitching, editing,
view segmentaion,
projection, packing,
encoding

Delivery
Broadcast,
unicast,
transmission

Decoding&
Pre-procession
unpacking,
selection,
re-projection

Rendering&
Composition
Texture/depth/overlay
composition,
video/audio playback,
& head/position
tracking interaction

Composition
Video/Image/text
Audio/sound effects
medias

Feedback
Head/position
orientation for
region of interest

FIG. 14a

FIG. 14b

EP 3 806 458 A1

# FIG. 15

FIG. 16

Transmission

# FIG. 17

Reception

Receiver

Feedback Information

Reception Processor / File Extractor

Feedback Information

Metadata Parser

Decapsulation Processor

Feedback Processor (Receiving Side)

Data Decoder

Unpacking/Selection

Rendering (texture, depth, overlay)

Feedback Information

Composition

Viewport Generation

Display

# FIG. 18

stadium

Position B

Position A

Position C

FIG. 19

## FIG. 20

| | | | |
|---|---|---|---|
| VP#1 | vpgr | track_group_id = 0 | non_contiguous_flag = 0 |
| VP#2 | vpgr | track_group_id = 0 | non_contiguous_flag = 0 |
| | vpgr | track_group_id = 1 | non_contiguous_flag = 1 |
| VP#3 | vpgr | track_group_id = 2 | non_contiguous_flag = 0 |
| VP#4 | vpgr | track_group_id = 1 | non_contiguous_flag = 1 |
| | vpgr | track_group_id = 2 | non_contiguous_flag = 0 |
| VP#5 | vpgr | track_group_id = 1 | non_contiguous_flag = 1 |
| | vpgr | track_group_id = 2 | non_contiguous_flag = 0 |

EP 3 806 458 A1

57

# FIG. 21a

CONTIGUOUS SPACE
- Stadium
  - VP1
  - VP2 (origin)
  - VP3 (default)
  - VP4
- Locker Room 1
  - VP5 (default. origin)
- Locker Room 2
  - VP6 (default. origin)
- Stadium Entrance
  - VP7 (default. origin)

DISJOINT SPACE
- Locker Rooms
  - VP5
  - VP6 (default. origin)

track_group_id = 0    track_group_id = 1

track_group_id = 2

| VP#1~VP#4 | vpgr | track_group_id = 0 |
| | | non_contiguous_flag =0 |
| | | track_group_id = 2 |
| | | non_contiguous_flag =1 |
| VP#5~VP#6 | vpgr | track_group_id = 1 |
| | vpgr | non_contiguous_flag =0 |
| | vpgr | track_group_id = 2 |
| | vpgr | non_contiguous_flag =1 |
| VP#7 | vpgr | track_group_id = 2 |
| | | non_contiguous_flag =1 |

**FIG.21b**

FIG. 22a

FIG. 22b

FIG. 23

track_group_id = 0

track_group_id = 1

VP#1

VP#3

VP#4

VP#2

VP#5

VP#1    vpgr track_group_id = 0
                      anchor_viewpoint_flag = 0
                      non_contiguous_flag = 0
           vpgr track_group_id = 1
                      anchor_viewpoint_flag = 0
                      non_contiguous_flag = 1

VP#2    vpgr track_group_id = 0
                      anchor_viewpoint_flag = 1
                      non_contiguous_flag = 0
           vpgr track_group_id = 1
                      anchor_viewpoint_flag = 0
                      non_contiguous_flag = 1

VP#3    vpgr track_group_id = 0
                      anchor_viewpoint_flag = 0
                      non_contiguous_flag = 1
           vpgr track_group_id = 1
                      anchor_viewpoint_flag = 0
                      non_contiguous_flag = 0

VP#4    vpgr track_group_id = 0
                      anchor_viewpoint_flag = 0
                      non_contiguous_flag = 1
           vpgr track_group_id = 1
                      anchor_viewpoint_flag = 1
                      non_contiguous_flag = 0

VP#5    vpgr track_group_id = 0
                      anchor_viewpoint_flag = 0
                      non_contiguous_flag = 1
           vpgr track_group_id = 1
                      anchor_viewpoint_flag = 0
                      non_contiguous_flag = 0

FIG.24a

CONTIGUOUS SPACE
- Stadium
  - VP1
  - VP2 (origin)
  - VP3 (default)
  - VP4
- Locker Room 1
  - VP5 (default. origin)
- Locker Room 2
  - VP6 (default. origin)
- Stadium Entrance
  - VP7 (default. origin)

DISJOINT SPACE
- Locker Rooms
  - VP5
  - VP6 (default. origin)

track_group_id = 0,1

track_group_id = 2

VP#1    vpgr track_group_id = 0
            anchor_viewpoint_flag = 1
            non_contiguous_flag = 0
        vpgr track_group_id = 1
            anchor_viewpoint_flag = 0
            non_contiguous_flag = 1
        vpgr track_group_id = 2
            anchor_viewpoint_flag = 0
            non_contiguous_flag = 1

VP#2-4  vpgr track_group_id = 0
            anchor_viewpoint_flag = 0
            non_contiguous_flag = 0
        vpgr track_group_id = 1
            anchor_viewpoint_flag = 0
            non_contiguous_flag = 1
        vpgr track_group_id = 2
            anchor_viewpoint_flag = 0
            non_contiguous_flag = 1

VP#5    vpgr track_group_id = 0
            anchor_viewpoint_flag = 0
            non_contiguous_flag = 1
        vpgr track_group_id = 1
            anchor_viewpoint_flag = 1
            non_contiguous_flag = 0

VP#6    vpgr track_group_id = 1
            anchor_viewpoint_flag = 0
            non_contiguous_flag = 0

VP#7    vpgr track_group_id = 0
            anchor_viewpoint_flag = 0
            non_contiguous_flag = 1
        vpgr track_group_id = 1
            anchor_viewpoint_flag = 0
            non_contiguous_flag = 1
        vpgr track_group_id = 2
            anchor_viewpoint_flag = 1
            non_contiguous_flag = 0

FIG. 24b

- Linkage icon
- Name space
- Still image, preview video or actual video in the target track

- Descriptions

| | | |
|---|---|---|
| Locker Room 1 | Locker Room 2 | Stadium Entrance |
| Descriptions of Locker Room 1 | Descriptions of Locker Room 2 | Descriptions of Stadium Entrance |

VP#1

Link to the additional viewpoints/locker rooms and ...

# FIG. 25a

Stadium

VP# 1

VP# 2

VP# 3

VP# 4

Locker Room 1

VP# 5

Locker Room 2

VP# 6

Stadium Entrance

VP# 7

FIG. 25b

# FIG. 26

```
                    ( Start )
                        │
                        ▼
┌─────────────────────────────────────────────────────────┐
│ Acquire 360-degree video data captured by at least one   │ ～ S2600
│ image acquisition device                                 │
└─────────────────────────────────────────────────────────┘
                        │
                        ▼
┌─────────────────────────────────────────────────────────┐
│ Process 360-degree video data and derive two-dimensional │ ～ S2610
│ picture including omnidirectional image                  │
└─────────────────────────────────────────────────────────┘
                        │
                        ▼
┌─────────────────────────────────────────────────────────┐
│ Generate metadata for 360-degree video data              │ ～ S2620
└─────────────────────────────────────────────────────────┘
                        │
                        ▼
┌─────────────────────────────────────────────────────────┐
│ Encode information about two-dimensional picture         │ ～ S2630
└─────────────────────────────────────────────────────────┘
                        │
                        ▼
┌─────────────────────────────────────────────────────────┐
│ Perform encapsulation based on information about         │ ～ S2640
│ two-dimensional picture and metadata                     │
└─────────────────────────────────────────────────────────┘
                        │
                        ▼
                    ( End )
```

# FIG. 27

# FIG. 28

```
                    ┌─────────────┐
                    │    Start    │
                    └─────────────┘
                           │
                           ▼
    ┌──────────────────────────────────────────────┐
    │  Receive information about 360-degree video data │  ── S2800
    └──────────────────────────────────────────────┘
                           │
                           ▼
    ┌──────────────────────────────────────────────┐
    │  Acquire information about encoded picture and metadata from │  ── S2810
    │  information about 360-degree video data;      │
    └──────────────────────────────────────────────┘
                           │
                           ▼
    ┌──────────────────────────────────────────────┐
    │  Decode picture based on information about encoded picture │  ── S2820
    └──────────────────────────────────────────────┘
                           │
                           ▼
    ┌──────────────────────────────────────────────┐
    │     Render decoded picture based on metadata   │  ── S2830
    └──────────────────────────────────────────────┘
                           │
                           ▼
                    ┌─────────────┐
                    │     End     │
                    └─────────────┘
```

# FIG. 29

360 Video Transmission Apparatus

<div style="text-align:center">

**INTERNATIONAL SEARCH REPORT**

</div>

| International application No. |
|---|
| **PCT/KR2019/006269** |

**A.   CLASSIFICATION OF SUBJECT MATTER**

*H04N 13/178(2018.01)i, H04N 13/161(2018.01)i, H04N 13/194(2018.01)i, H04N 13/111(2018.01)i*

According to International Patent Classification (IPC) or to both national classification and IPC

**B.   FIELDS SEARCHED**

Minimum documentation searched (classification system followed by classification symbols)
H04N 13/178; G06T 1/00; G06T 13/00; H04N 21/236; H04N 21/41; H04N 21/472; H04N 9/31; H04N 13/161; H04N 13/194; H04N 13/111

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: 360 video, transmission, metadata, viewpoint, distance, transition, effect

**C.   DOCUMENTS CONSIDERED TO BE RELEVANT**

| Category* | Citation of document, with indication, where appropriate, of the relevant passages | Relevant to claim No. |
|---|---|---|
| Y | WO 2017-142353 A1 (LG ELECTRONICS INC.) 24 August 2017 <br> See paragraphs [0125], [0179], [0380], [0491]; and claim 1. | 1-15 |
| Y | KR 10-2018-0046044 A (SK TELECOM CO., LTD.) 08 May 2018 <br> See paragraphs [0008], [0022], [0042]; and claim 8. | 1-15 |
| Y | US 2014-0043340 A1 (MICROSOFT CORPORATION) 13 February 2014 <br> See paragraph [0087]. | 10-11 |
| A | KR 10-2011-0097690 A (SAMSUNG ELECTRONICS CO., LTD.) 31 August 2011 <br> See paragraphs [0251]-[0261]; and figures 19-20. | 1-15 |
| A | JP 6309749 B2 (SHARP CORP.) 11 April 2018 <br> See paragraphs [0008]-[0014]. | 1-15 |

☐  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 OCTOBER 2019 (01.10.2019) | **01 OCTOBER 2019 (01.10.2019)** |

| Name and mailing address of the ISA/KR | Authorized officer |
|---|---|
| Korean Intellectual Property Office <br> Government Complex Daejeon Building 4, 189, Cheongsa-ro, Seo-gu, Daejeon, 35208, Republic of Korea <br> Facsimile No.  +82-42-481-8578 | Telephone No. |

Form PCT/ISA/210 (second sheet) (January 2015)

| International application No. |
| --- |
| **PCT/KR2019/006269** |

| Patent document cited in search report | Publication date | Patent family member | Publication date |
| --- | --- | --- | --- |
| WO 2017-142353 A1 | 24/08/2017 | CN 108702528 A | 23/10/2018 |
| | | CN 109076255 A | 21/12/2018 |
| | | EP 3419295 A1 | 26/12/2018 |
| | | EP 3451675 A1 | 06/03/2019 |
| | | KR 10-2018-0107149 A | 01/10/2018 |
| | | US 2019-0141311 A1 | 09/05/2019 |
| | | WO 2017-188714 A1 | 02/11/2017 |
| KR 10-2018-0046044 A | 08/05/2018 | None | |
| US 2014-0043340 A1 | 13/02/2014 | CN 104520851 A | 15/04/2015 |
| | | CN 104541270 A | 22/04/2015 |
| | | CN 104541272 A | 22/04/2015 |
| | | CN 107967109 A | 27/04/2018 |
| | | EP 2883160 A1 | 17/06/2015 |
| | | EP 2883212 A1 | 17/06/2015 |
| | | JP 2015-534662 A | 03/12/2015 |
| | | KR 10-2015-0043314 A | 22/04/2015 |
| | | US 10008015 B2 | 26/06/2018 |
| | | US 2014-0043325 A1 | 13/02/2014 |
| | | US 2014-0046923 A1 | 13/02/2014 |
| | | US 2014-0047381 A1 | 13/02/2014 |
| | | US 2014-0047385 A1 | 13/02/2014 |
| | | US 9996953 B2 | 12/06/2018 |
| | | WO 2014-025947 A1 | 13/02/2014 |
| | | WO 2014-026069 A1 | 13/02/2014 |
| | | WO 2014-026070 A1 | 13/02/2014 |
| KR 10-2011-0097690 A | 31/08/2011 | US 2012-0314937 A1 | 13/12/2012 |
| | | US 9456196 B2 | 27/09/2016 |
| | | WO 2011-105814 A2 | 01/09/2011 |
| | | WO 2011-105814 A3 | 12/01/2012 |
| JP 6309749 B2 | 11/04/2018 | JP 2015-114716 A | 22/06/2015 |

Form PCT/ISA/210 (patent family annex) (January 2015)